(19) **Europäisches Patentamt / European Patent Office / Office européen des brevets**

(11) **EP 3 488 665 B1**

(12) **EUROPEAN PATENT SPECIFICATION**

(45) Date of publication and mention
of the grant of the patent:
**19.02.2020 Bulletin 2020/08**

(51) Int Cl.:
**H05B 33/08** *(2020.01)* **H04B 10/116** *(2013.01)*
**G06F 17/15** *(2006.01)* **F21K 9/65** *(2016.01)*

(21) Application number: **17737271.1**

(22) Date of filing: **10.07.2017**

(86) International application number:
**PCT/EP2017/067215**

(87) International publication number:
**WO 2018/015187 (25.01.2018 Gazette 2018/04)**

(54) **DETECTING SIGNALS EMBEDDED IN VISIBLE LIGHT**

SIGNALERKENNUNG, DIE IN SICHTBARES LICHT EINGEBETTET IST

DÉTECTION DE SIGNAUX INTÉGRÉS DANS LA LUMIÈRE VISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2016 EP 16180475**

(43) Date of publication of application:
**29.05.2019 Bulletin 2019/22**

(73) Proprietor: **Signify Holding B.V.**
**5656 AE Eindhoven (NL)**

(72) Inventors:
• **DAVIES, Robert, James**
**5656 AE Eindhoven (NL)**

• **DE BRUIJN, Frederik, Jan**
**5656 AE Eindhoven (NL)**

• **VAN VOORTHUISEN, Paul, Henricus, Johannes, Maria**
**5656 AE Eindhoven (NL)**

• **NIJSSEN, Stephanus, Joseph, Johannes**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**US-A1- 2013 126 713**

EP 3 488 665 B1

## Description

TECHNICAL FIELD

The present disclosure relates to the embedding of signals in visible light, and to the detection of such signals using a camera.

BACKGROUND

Visible light communication (VLC) refers to the communication of information by means of a signal embedded in visible light, sometimes also referred to as coded light. The information is embedded by modulating a property of the visible light according to any suitable modulation technique. E.g. according to one example of a coded light scheme, the intensity of the visible light from each of multiple light sources is modulated to form a carrier waveform having a certain modulation frequency, with the modulation frequency being fixed for a given one of the light sources but different for different ones of the light sources such that the modulation frequency acts as a respective identifier (ID) of each light source. In more complex schemes a property of the carrier waveform may be modulated in order to embed symbols of data in the light emitted by a given light source, e.g. by modulating the amplitude, frequency, phase or shape of the carrier waveform in order to represent the symbols of data. In yet further possibilities, a baseband modulation may be used - i.e. there is no carrier wave, but rather symbols are modulated into the light as patterns of variations in the brightness of the emitted light. This may either be done directly (intensity modulation) or indirectly (e.g. by modulating the mark:space ratio of a PWM dimming waveform, or by modulating the pulse position).

The current adoption of LED technology in the field of lighting has brought an increased interest in the use of coded light to embed signals into the illumination emitted by luminaires, e.g. room lighting, thus allowing the illumination from the luminaires to double as a carrier of information. Preferably the modulation is performed at a high enough frequency and low enough modulation depth to be imperceptible to human vision, or at least such that any visible temporal light artefacts (e.g. flicker and/or strobe artefacts) are weak enough to be tolerable to humans. US 2013/0126713 A1 discloses several such modulation schemes.

Based on the modulations, the information in the coded light can be detected using a photodetector. This can be either a dedicated photocell, or a camera comprising an array of photocells (pixels) and a lens for forming an image on the array. E.g. the camera may be a general purpose camera of a mobile user device such as a smartphone or tablet. Camera based detection of coded light is possible with either a global-shutter camera or a rolling-shutter camera (e.g. rolling-shutter readout is typical to mobile CMOS image sensors found in mobile devices such as smartphones and tablets). In a global-shutter camera the entire pixel array (entire frame) is captured at the same time, and hence a global shutter camera captures only one temporal sample of the light from a given luminaire per frame. In a rolling-shutter camera on the other hand, the frame is divided into lines (typically horizontal rows) and the frame is exposed line-by-line in a temporal sequence, each line in the sequence being exposed at a slightly later time than the last. Thus the rolling-shutter readout causes fast temporal light modulations to translate into spatial patterns in the line-readout direction of the sensor, from which the encoded signal can be decoded. Hence while rolling-shutter cameras are generally the cheaper variety and considered inferior for purposes such as photography, for the purpose of detecting coded light they have the advantage of capturing more temporal samples per frame, and therefore a higher sample rate for a given frame rate. Nonetheless coded light detection can be achieved using either a global-shutter or rolling-shutter camera as long as the sample rate is high enough compared to the modulation frequency or data rate (i.e. high enough to detect the modulations that encode the information).

Coded light has many possible applications. For instance a different respective ID can be embedded into the illumination emitted by each of the luminaires in a given environment, e.g. those in a given building, such that each ID is unique at least within the environment in question. E.g. the unique ID may take the form of a unique modulation frequency or unique sequence of symbols. This can then enable any one or more of a variety of applications. For example if a mobile device for remotely controlling the luminaires is equipped with a light sensor such as a camera, then the user can direct the sensor toward a particular luminaire or subgroup of luminaires so that the mobile device can detect the respective ID(s) from the emitted illumination captured by the sensor, and then use the detected ID(s) to identify the corresponding one or more luminaires in order to control them. This provides a user-friendly way for the user to identify which luminaire or luminaires he or she wishes to control. E.g. the mobile device may take the form of a smartphone or tablet running a lighting control app, with the app being configured to detect the embedded IDs from the captured light and enact the corresponding control functionality.

As another example, there may be provided a location database which maps the ID of each luminaire to its location (e.g. coordinates on a floorplan), and this database may be made available to mobile devices from a server via one or more networks such as the Internet and/or a wireless local area network (WLAN). Then if a mobile device captures an image or images containing the light from one or more of the luminaires, it can detect their IDs and use these to look up their locations in the location database in order to detect the location of the mobile device based thereon. E.g. this may be achieved by measuring a property of the received light such as received signal strength, time of flight and/or angle of arrival, and then applying technique such as triangulation, trilateration, multilateration or fingerprinting, or simply by assuming that the location of the nearest or only captured luminaire is approximately that of the mobile device (and in some cases such information may be combined with information from other sources, e.g. on-board accelerometers, magnetometers or the like, in order to provide a more robust result). The detected location may then be output to the user through the mobile device for the purpose of navigation, e.g. showing the position of the user on a floorplan of the building. Alternatively or additionally, the determined location may be used as a condition for the user to access a location based service. E.g. the ability of the user to use his or her mobile device to control the lighting (or another utility such as heating) in a certain region (e.g. a certain room) may be made conditional on the location of his or her mobile device detected to be within that same region (e.g. the same room), or perhaps within a certain control zone associated with the lighting in question. Other forms of location-based service may include, e.g., the ability to make or accept location-dependent payments.

As another example, a database may map luminaire IDs to location specific information such as information on a particular museum exhibit in the same room as a respective one or more luminaires, or an advertisement to be provided to mobile devices at a certain location illuminated by a respective one or more luminaires. The mobile device can then detect the ID from the illumination and use this to look up the location specific information in the database, e.g. in order to display this to the user of the mobile device. In further examples, data content other than IDs can be encoded directly into the illumination so that it can be communicated to the receiving device without requiring the receiving device to perform a look-up.

Thus the use of a camera to detect coded light has various commercial applications in the home, office or elsewhere, such as a personalized lighting control, indoor navigation, location based services, etc.

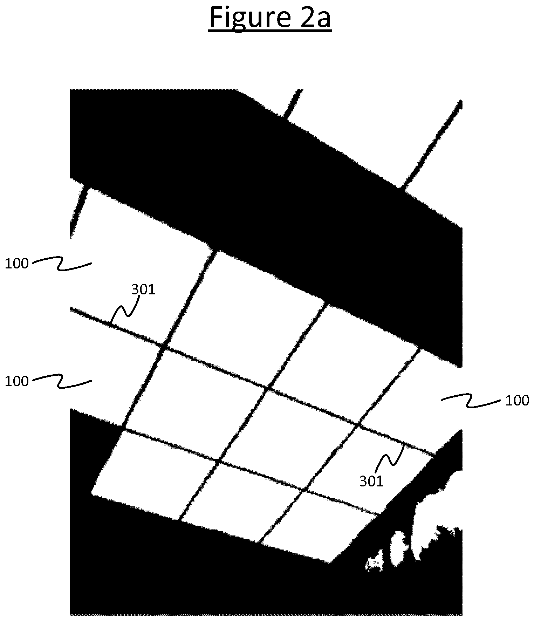

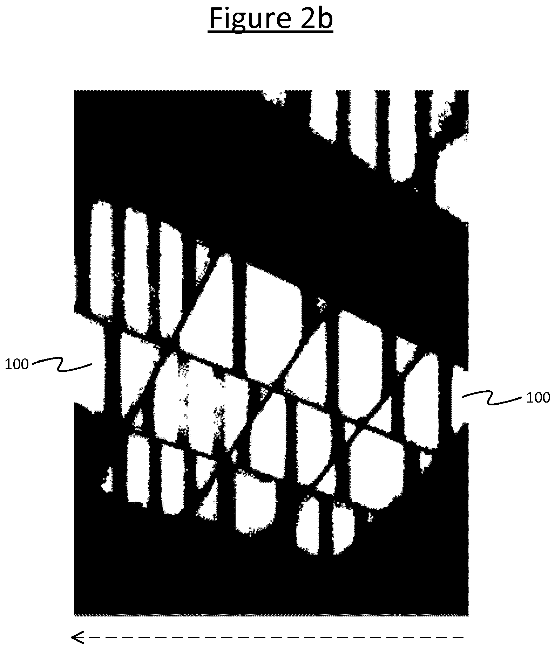

Typically for such applications the so-called front-facing camera of the smartphone is used (the camera on the same face as the device's main screen, typically a touchscreen). Thus the camera directly captures the luminaires on the ceiling above the user while also keeping the device's screen suitably orientated to be viewed by the user. Figures 2a and 2b show an example of a lighting system composed of adjacent luminaires in the form of ceiling tiles. Figure 2a shows the humanly visible appearance - to the human user the fast modulation of the coded light is imperceptible and the light intensity appears constant. Figure 2b on the other hand shows the appearance as captured by a rolling shutter camera under short exposure capture (with the dashed line indicating the rolling-shutter readout direction). Here the coded light modulation appears as spatial patterns in each of the luminaires, each of which associated with a different specific code, e.g. different respective ID. In the example shown the capture is by a rolling-shutter camera such that the message from each luminaire appears as a different spatial pattern in the captured image. However it will be appreciated that capture with a global-shutter camera is also possible, in which case the modulation is captured as a temporal modulation over multiple frames (and in fact with a rolling-shutter camera, in some cases the pattern from multiple frames may be stitched together).

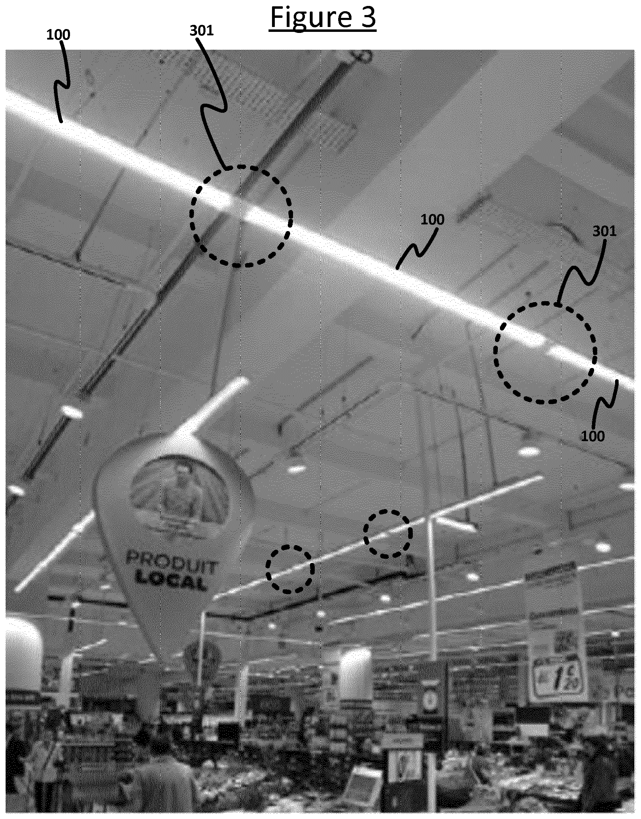

In other forms of wireless data communication, 'channel separability' has to be implemented by mathematical signal orthogonality, e.g. the use of sine waves of different frequency, or more generally frequency multiplexing; or else by the use of a transmission protocol, e.g. use of repeated transmission using randomized packet intervals (the so-called ALOHA protocol). But when multiple luminaires simultaneously fill the field of view of the camera, such that multiple luminaires emitting different signals are captured in the same frame, then image-based segmentation can be used to separate the different luminaires prior to decoding of the information embedded in the coded light. I.e. camera based detection of coded light has the advantage that when light is received simultaneously from multiple coded light sources, it is also received with spatial separation between the light from the different sources, because this light appears in different spatial regions of the image separated by a recognizable gap or division in between, e.g. see again Figures 2a and 2b. A similar scenario is also shown in Figure 3, but with a linear (ID) array of trunk lighting. The image-based segmentation essentially provides a form of channel separation among multiple signals that might be difficult or impossible to decode otherwise. Therefore, concurrent detection of multiple coded light sources does not have to rely on 'channel separability' as an inherent characteristic of the signals themselves.

SUMMARY

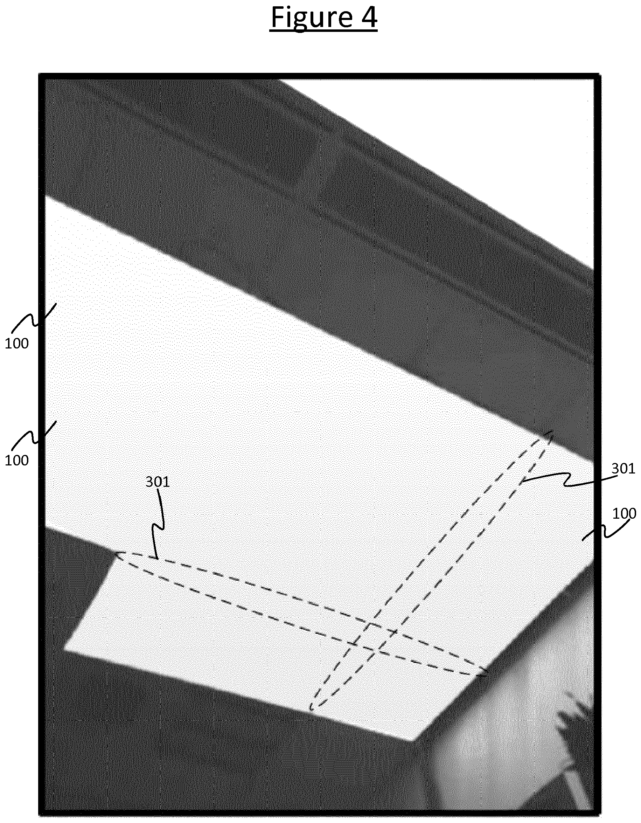

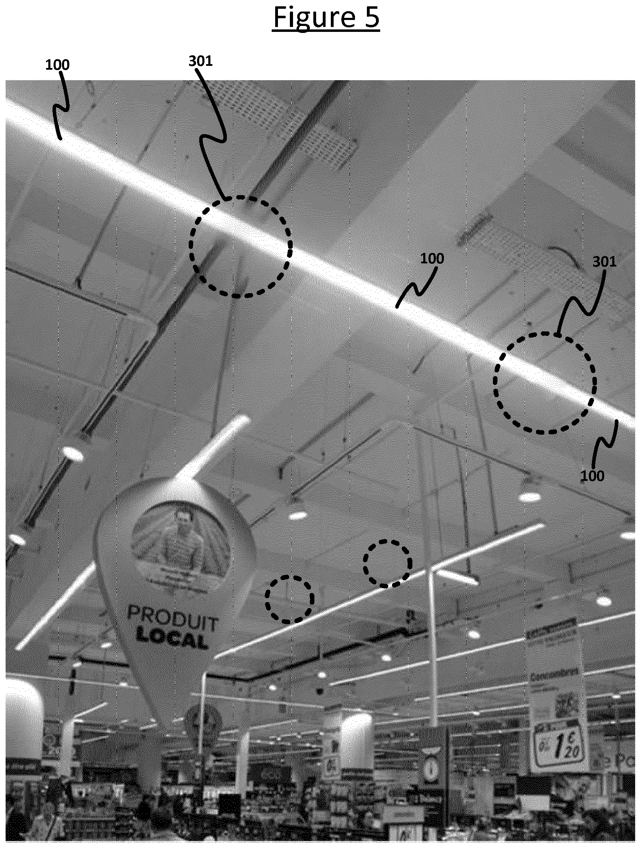

However, it is not always possible or at least practical to distinguish between the light from the different luminaires (or more generally lighting units) based on a separation between them being visible in the captured image(s). For example, for aesthetic reasons the designer of the room may wish to concatenate the luminaires closely enough that no boundary is visible to human viewers present in the environment. This may also have the effect that the boundaries are not detectable to the image processing module from the captured image(s). An example of this is illustrated in Figure 4, which shows a captured image of a two-dimensional array of luminous ceiling tiles concatenated together to form a so-called "luminous ceiling" (compare with Figure 2a). Figure 5 illustrates an example of a similar issue in the case of a one-dimensional array of trunk lighting (compare with Figure 3). Even if the concatenation is not so close that no visible boundary is visible in the image(s), the appearance may still not be clear enough to allow for reliable detection by the image processing module.

To address such concerns or similar, the present invention provides a technique based on detection of an auto-correlation pattern encoded as a spatial pattern in the light emitted from each of a plurality of concatenated lighting units, e.g. variations in brightness along the length of each luminaire.

According to one aspect disclosed herein, there is provided a system comprising: an arrangement of contiguously-mounted lighting units arranged to emit light comprising visible illumination into an environment; transmission circuitry arranged to temporally modulate the visible illumination emitted by each of some or all of the arrangement of lighting units so as to embed a different respective signal into the visible illumination emitted by a data-transmitting luminous area of each, thereby providing multiple data-transmitting lighting units; and detecting equipment comprising a camera for capturing images of the data-transmitting luminous areas of one or more of said data-transmitting lighting units, and an image processing module configured to detect the respective signals based on one or more of the captured images. The system is further configured to spatially modulate at least part of the light emitted by each of one, some or all of the lighting units of said arrangement with a spatial pattern, thereby providing one or more spatially-patterned lighting units. The image processing module of the detecting equipment is configured to distinguish each of said one or more data-transmitting lighting units from amongst the multiple data-transmitting lighting units, and thereby detect the respective signals embedded in the illumination from said one or more data-transmitting lighting units, based on an auto correlation of said spatial pattern emitted by said one or more spatially-patterned lighting units appearing in one or more of the captured images. That is the image processing unit uses the auto-correlation to detect which lighting unit appears where in the capture image(s), i.e. to determine the boundary between lighting units.

In embodiments, the camera captures one or more images of the data-transmitting luminous areas of a plurality of said multiple data-transmitting lighting units, and the image processing module is configured to detect the respective signals from the plurality of data-transmitting lighting units based on the one or more captured images. In this case image processing module may be configured to distinguish between said plurality of data-transmitting lighting units, and thereby between the different signals embedded in the illumination from said plurality of data-transmitting lighting units, based on an auto correlation of said spatial pattern emitted by said one or more spatially-patterned lighting units appearing in one or more of the captured images.

The camera may be a rolling-shutter camera, in which case the detecting equipment may be configured to reveal the spatial pattern by averaging the captured illumination over multiple frames (multiple individual images captured at multiple different respective moments in time), i.e. in order to remove the effect of the temporal modulation. Alternatively the camera may be a global shutter camera, in which case the spatial pattern may appear in a single frame (single still image) without the need for averaging.

The array of luminaires may be a one dimensional array in which case the spatial pattern may be a one or two dimensional pattern, or a two dimensional array. Alternatively the array may be a two dimensional array in which case the spatial pattern is also two dimensional.

In embodiments the system is configured to spatially modulate at least part of the light emitted by each of some or all of the lighting units of said arrangement with the spatial pattern, thereby providing multiple spatially-patterned lighting units.

Preferably, the system is configured such that said spatial modulation comprises spatially modulating at least part of the light emitted by each of the multiple spatially-patterned lighting units with an instance of the same spatial pattern; and the image processing module of the detecting equipment is configured to perform said distinguishing between said plurality of data-transmitting lighting units, and thereby between the different signals embedded in the illumination from said plurality of data-transmitting lighting units, based on the auto correlation between the instances of said spatial pattern emitted by said plurality of spatially-patterned lighting units. I.e. the image processing module uses the auto-correlation from one lighting unit in the array to the next to distinguish between the discrete lighting units (i.e. detect which lighting unit appears where the captured image).

Alternatively, the pattern used in each spatially-patterned lighting unit could be the same or different to one another, and the image processing module may perform the detection based on an auto-correlation between the pattern in the image and a pre-stored instance of the pattern (stored in a memory of the detecting equipment or in memory accessible to the detecting equipment, e.g. on server). However, using the auto-correlation from one lighting unit to the next may be preferred over this, as this avoids the need for prestoring pattern.

In embodiments, each of the spatially-patterned lighting units comprises a respective set of constituent light-emitting elements, each of the constituent light-emitting elements in the set being configured to emit a portion of said illumination; and wherein for each of said spatially-patterned lighting units, said spatial modulation is implemented by: a difference in brightness of the illumination emitted by different ones of the constituent light-emitting elements in the respective set; or a non-uniform spacing of the constituent light-emitting elements in the respective set

Alternatively, for each of said the spatially-patterned lighting units, said spatial modulation may be implemented by a spatially patterned occluder or reflector layer disposed over or within each of the spatially-patterned lighting units. This has the advantage that the occluder or reflector layer may be retrofitted over an existing lighting unit that does not itself emit a spatial pattern.

Note that preferably the spatial modulation to create the spatial pattern is achieved by a spatial modulation of the visible illumination emitted by each of the spatially-patterned lighting units, i.e. the same visible illumination that illuminates the environment 109. This advantageously allows the spatial patterning to be implemented with little in the way of additional components or complexity. Nonetheless, it is not excluded that the spatial modulation could instead be applied in an infrared (IR) or ultraviolet (UV) part of the light emitted by each of the luminaires, e.g. by means of separate IR or UV light emitting elements included in each of the luminaires for this purpose.

The pattern may be symmetric (i.e., reads the same backwards and forwards), or may be asymmetric.

In embodiments, the pattern may be asymmetric, and the image processing module may be configured to use to an appearance of pattern to determine a direction of the camera relative to the arrangement of lighting units.

In embodiments, the spatially-patterned lighting units are the same lighting units as the multiple data-transmitting lighting units,

In some such embodiments, the spatial pattern may cover all of the data-transmitting luminous area of each of the multiple lighting units. This advantageously provides some resistance over partial blocking of the luminaire since the remaining visible parts(s) should still evoke a correlation peak.

Alternatively, each of the multiple lighting units may have at least two edge regions, each edge region forming a boundary with at least one other of the lighting units, or forming an edge of the arrangement; and wherein for each of the multiple lighting units, the spatial pattern is emitted over only a part of the data-transmitting luminous area at one or more of the edge regions. E.g. the pattern may be included at one or both ends of the lighting units in a ID linear array, or on each of the four sides of a square ceiling tile. Note that the pattern does not necessarily have to be the same at each end, but may comprise different sub-patterns at difference edges. For instance, in at least one given dimension of the array the pattern may be located at the edge regions at both ends of the lighting unit, with a first sub-pattern at one end and a second sub-pattern at the other end (i.e. the pattern straddles the boundary between adjacent lighting units). Advantageously, this allows the end of a line of luminaires to be located by using just one of the sub-patterns.

For example the second sub-pattern may be a reversed version of the first sub-pattern pattern.

As another example, the second sub-pattern may be unrelated to the first sub-pattern.

In embodiments, the second-sub pattern may be different then the first sub-pattern; and the image processing module maybe configured to use to an appearance of the first and second sub-patterns determine a direction of the camera relative to the arrangement of lighting units.

As another example the second sub-pattern may be a complementary version of the first sub-pattern. This means the first and second sub-patterns have the property that the sum of their autocorrelations peaks when they are mutually-aligned and is zero everywhere else. Thus, a receiver that performs synchronized correlation with both sequences may obtain better detection performance.

As another example the second sub-pattern may be a reversed and inverted version of the first sub-pattern. That is, the pattern may be inversely symmetric (i.e. reads backwards and forwards but peak has different polarities each way). This means that the auto-correlation peak may be positive when looking towards one end of the luminaire and negative when looking towards the other end, again advantageously providing a directional clue.

As another example, the second sub-pattern may be a continuation of the first sub-pattern.

In further alternative embodiments, the pattern may be placed away from the edges of the lighting unit (e.g. centred on the centre of the lighting unit).

In embodiments, the spatial pattern is its own reversed form. This advantageously allows the pattern to be read in either direction by the detector. In embodiments this allows a simple receiver implementation (because the image processing module only needs to test the code in one direction). In a particular embodiment the spatial pattern is its own inverted, reversed form. This means that the polarity of the correlation peak determines the direction, allowing the image processing module to determine from what direction the camera it is viewing the lighting units (e.g. for navigation purposes).

In further embodiments, the array is one dimensional but the spatial pattern is two-dimensional. For example the pattern may comprise more than one sub-pattern in parallel along said one dimension, having different symbol periods (periods in space). This advantageously allows the sub-pattern with the longer symbol period to be used by the image processing module when the viewing distance or angle of the camera relative to the lighting units in question prevents resolution of the sub-pattern with the shorter symbol period.

Alternatively the array may be one dimensional but the spatial pattern may be two-dimensional.

Note also that in embodiments said spatial modulation comprises an invisible modulation in the visible illumination. In this case the spatial modulation is small enough to be substantially invisible to humans, and the multiple lighting units (100) in the array are concatenated closely enough such that no boundary between any of the multiple luminaires is visible to humans nor detectable to the image processing module (114) in any of the captured image. I.e. in an advantageous use case, the present invention can enable detection of the different signals even when the lighting units are arranged so that to human occupants of the environment the array appears as a continuous, uniform luminous surface.

Alternatively, the image processing module may additionally use one or more physical features of the array of lighting units appearing in the one or more images (such as the boundaries between luminaires or some other regularly repeating structural feature) to distinguish between the plurality of different luminaires and thereby the different signals.

According to another aspect disclosed herein, there is provided lighting equipment comprising: an arrangement of contiguously-mounted lighting units arranged to emit light comprising visible illumination into an environment; and transmission circuitry arranged to temporally modulate the visible illumination emitted by each of some or all of the arrangement of lighting units so as to embed a different respective signal into the visible illumination emitted by a data-transmitting luminous area of each, thereby providing multiple data-transmitting lighting units, wherein the signals are to be detected by detecting equipment comprising a camera for capturing images of the data-transmitting luminous areas of one or more of said multiple data-transmitting lighting units and further comprising an image processing module configured to detect the respective signals based on one or more of the captured images; wherein the system is further configured to spatially modulate at least part of the light emitted by each of some or all of the multiple lighting units of said arrangement with a spatial pattern, thereby providing one or more spatially-patterned lighting units, such that the image processing module of the detecting equipment can distinguish each of said one or more data-transmitting lighting units from amongst the multiple data-transmitting lighting units, and thereby detect the respective signals embedded in the illumination from said one or more data-transmitting lighting units, based on an auto correlation of said spatial pattern emitted by said one or more spatially-patterned lighting units appearing in one or more of the captured images.

According to another aspect disclosed herein, there is provided detecting equipment for use with an arrangement of contiguously-mounted lighting units arranged to emit light comprising visible illumination into an environment, the visible illumination emitted by each of some or all of the arrangement of lighting units being temporally modulated so as to embed a different respective signal into the visible illumination emitted by a data-transmitting luminous area of each, thereby providing multiple data-transmitting lighting units, wherein at least part of the light emitted by each of one or more of the arrangement of lighting units is also spatially modulated with a spatial pattern, thereby providing one or more spatially-patterned lighting units; the detecting equipment comprising: a camera for capturing images of the data-transmitting luminous areas of one or more of said multiple data-transmitting lighting units; and an image processing module configured to detect the respective signals based on one or more of the captured images; wherein the image processing module of the detecting equipment is configured to distinguish each of said one or more data-transmitting lighting units from amongst the multiple data-transmitting lighting units, and thereby detect the respective signals embedded in the illumination from said one or more data-transmitting lighting units, based on an auto correlation of said spatial pattern emitted by said one or more spatially-patterned lighting units appearing in one or more of the captured images.

According to another aspect disclosed herein, there is provided a method of emitting illumination comprising: operating an arrangement of contiguously-mounted lighting units to emit light comprising visible illumination into an environment; temporally modulating the visible illumination emitted by each of some or all of the arrangement of lighting units so as to embed a different respective signal into the visible illumination emitted by a data-transmitting luminous area of each, thereby providing multiple data-transmitting lighting units, wherein the signals are to be detected by detecting equipment comprising a camera for capturing images of the data-transmitting luminous areas of one or more of said multiple data-transmitting lighting units and further comprising an image processing module configured to detect the respective signals based on one or more of the captured images; and spatially modulating at least part of the light emitted by each of one or more of the lighting units of said arrangement with a spatial pattern, thereby providing one or more spatially-patterned lighting units, such that the image processing module of the detecting equipment can distinguish each of said one or more data-transmitting lighting units from amongst the multiple data-transmitting lighting units, and thereby detect the respective signals embedded in the illumination from said one or more data-transmitting lighting units, based on an auto correlation of said spatial pattern emitted by said one or more spatially-patterned lighting units appearing in one or more of the captured images.

According to another aspect disclosed herein, there is provided a method of detecting coded light from an arrangement of contiguously-mounted lighting units arranged to emit light comprising visible illumination into an environment, the visible illumination emitted by each of some or all of the arrangement of lighting units being temporally modulated so as to embed a different respective signal into the visible illumination emitted by a data-transmitting luminous surface of each, thereby providing multiple data-transmitting lighting units, wherein at least part of the light emitted by each of one or more of the arrangement of lighting units is also spatially modulated with a spatial pattern, thereby providing one or more spatially-patterned lighting units; the method comprising: using a camera to capture one or more images of the data-transmitting luminous areas of one or more of said multiple data-transmitting lighting units; and detecting the respective signals based on one or more of the captured images; wherein said detecting comprises distinguishing each of said one or more data-transmitting lighting units from amongst the multiple data-transmitting lighting units, and thereby detecting the respective signals embedded in the illumination from said one or more data-transmitting lighting units, based on an auto correlation of said spatial pattern emitted by said one or more spatially-patterned lighting units appearing in one or more of the captured images.

According to another aspect disclosed herein, there is provided a computer program product for detecting coded light from an arrangement of contiguously-mounted lighting units arranged to emit light comprising visible illumination into an environment, the visible illumination emitted by each of some or all of the arrangement of lighting units being temporally modulated so as to embed a different respective signal into the visible illumination emitted by a data-transmitting luminous surface of each, thereby providing multiple data-transmitting lighting units, wherein at least part of the light emitted by each of one or more of the arrangement of lighting units is also spatially modulated with a spatial pattern, thereby providing one or more spatially-patterned lighting units; the computer program product comprising code embodied on computer-readable storage and configured so as when run on one or more processing units to perform operations of: receiving one or more images, captured by a camera, of the data-transmitting luminous areas of one or more of said multiple data-transmitting lighting units; and detecting the respective signals based on one or more of the captured images; wherein said detecting comprises distinguishing each of said one or more data-transmitting lighting units from amongst the multiple data-transmitting lighting units, and thereby detecting the respective signals embedded in the illumination from said one or more data-transmitting lighting units, based on an auto correlation of said spatial pattern emitted by said one or more spatially patterned lighting units appearing in one or more of the captured images.

## BRIEF DESCRIPTION OF THE DRAWINGS

To assist understanding of the present disclosure and to show how embodiments may be put into effect, reference is made by way of example to the accompanying drawings in which:

Figure 1 is a schematic block diagram of a system comprising a luminaire and a detecting device;

Figure 2a is an image of an arrangement of luminaires;

Figure 2b is an image of the arrangement of Figure 2a captured by a rolling shutter camera, including a rolling pattern due to codes embedded in the illumination emitted by the luminaires;

Figure 3 is an image of another arrangement of luminaires;

Figure 4 is an image of a similar arrangement to that of Figure 2a but with no visible separation between the different luminaires;

Figure 5 is an image of a similar arrangement to that of Figure 3 but with no visible separation between the different luminaires;

Figure 6a is a schematic side-on illustration of an arrangement of luminaires including a spatial pattern for identifying the boundaries between the different luminaires;

Figure 6b is another schematic side-on illustration of an arrangement of luminaires including a spatial light pattern for identifying the boundaries between the different luminaires;

Figure 6c is another schematic side-on illustration of an arrangement of luminaires with a spatial light pattern of light for identifying the boundaries between the different luminaires;

Figure 6d is another schematic side-on illustration of an arrangement of luminaires with a spatial light pattern for identifying the boundaries between the different luminaires;

Figure 6e is another schematic side-on illustration of an arrangement of luminaires with a spatial light pattern for identifying the boundaries between the different luminaires;

Figure 6f is another schematic side-on illustration of an arrangement of luminaires with a spatial light pattern for identifying the boundaries between the different luminaires;

Figure 7 is another schematic side-on illustration of an arrangement of luminaires with a spatial light pattern for identifying the boundaries between the different luminaires;

Figure 8a is a schematic illustration of a luminaire with a spatial pattern being implemented by means of a weighting applied to the brightnesses of the light-emitting elements;

Figure 8b is a schematic illustration of a luminaire with a spatial pattern being implemented by means of a patterned occluder layer;

Figure 8c is a schematic illustration of a luminaire with a spatial pattern being implemented by means of a patterned reflector layer;

Figure 8d is a schematic illustration of a luminaire with a spatial pattern being implemented by means of the spacing between light-emitting elements within the luminaire;

Figure 9a is a black & white version of a captured image of a luminaire; and

Figure 9b is a pilot showing the detected brightness vs. distance along the length of the luminaire of Figure 9a.

## DETAILED DESCRIPTION OF EMBODIMENTS

In order to reliably find boundaries between luminaires, the present invention employs a deliberate, known spatial pattern of emitted light that has good auto-correlation properties. In embodiments, by trading off amplitude and length, a pattern can be chosen that is easy to detect electronically (in some cases even when partially occluded) but that is essentially invisible to the human observer.

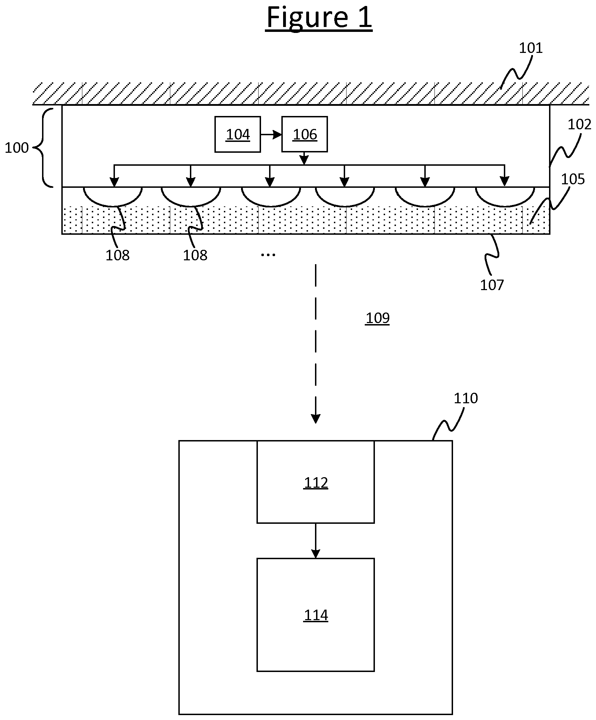

Figure 1 shows an example of a luminaire 100 for emitting coded light and detecting equipment 110 for detecting coded light in accordance with embodiments of the present disclosure. The luminaire 100 is mounted on a supporting surface 101, typically the ceiling (though this could instead be another surface such as a wall). The luminaire 100 may be mounted on the supporting surface 101 by being affixed over the supporting surface 101 (as illustrated) or by being embedded in the surface (a portion of the supporting surface 101 being cut away to accommodate the luminaire 100). Either way, the luminaire 100 is mounted so as to emit visible illumination outward from the supporting surface 101 into an environment 109 in order to contribute to illuminate that environment 109 (so as to enable human occupants to see and find their way about within the environment). The environment 109 in question may be an indoor space such as one or more rooms of an office, home or retail space; or may be an outdoor space such as a park or garden; or a partially covered space such as a stadium or gazebo.

The luminaire 100 comprises one or more light-emitting elements 108 disposed in or on a luminaire body 102 in the form of a housing or support (e.g. frame) arranged to house and/or support the light-emitting elements 108. The light-emitting elements 108 may be implemented in one or more lamps (with one or more of the light-emitting element 108 per lamp), wherein the (or each) lamp maybe a removable and replaceable component to be plugged into the luminaire 100. Whatever form they take, the light-emitting elements 108 are arranged to actively emit the above-mentioned illumination into the environment 109, being disposed on an outward-facing luminous surface 107 (luminous area) of the luminaire body 102 (a surface facing the environment 109). The luminous surface 107 may refer herein to the surface formed by the outward-facing surface of light-emitting elements 108 themselves and the surface of the luminaire body 102 in between them (which is typically substantially reflective, either in the sense of mirror reflection or diffuse reflection). Or optionally, the luminaire 105 may comprise a diffuser 105 disposed over the light-emitting elements 108 (between the luminous elements 108 and the environment 109), in which case the luminous surface 107 (luminous area) maybe considered the outward facing surface of the diffuser 105 (i.e. the surface facing the environment 109) through which the illumination form the light-emitting elements 108 emit their illumination. Either way, the illumination from the light-emitting elements 108 is modulated to embed a signal, as will be discuses in more detail shortly, such that the luminous surface 107 thus becomes a data-transmitting luminous surface of the luminaire 100.

Each of the light-emitting elements 108 may take any suitable form such as an LED, a set of LEDs, or a filament bulb. The luminaire 100 further comprises a driver 106 coupled to the light-emitting element 108, and a controller 104 coupled to the driver 106. The driver 106 is arranged to supply power from a power source (not shown) to the light-emitting elements 108 in order to cause them to actively emit the illumination. By "actively" emit herein it is meant that the luminaire 100 has or is connected to a power supply (not shown) which supplies energy in a form other than light (typically electricity), and the driver 106 supplies this energy to the light-emitting elements 108 to convert into the illumination which is sent out into the environment 109. I.e. the emitted illumination is generated by the luminaire 100 (as opposed to passive absorption and re-emission of ambient light).

Furthermore, the controller 104 is arranged to control the driver 106 to vary a property of the illumination emitted by the light-emitting elements 108, typically the intensity, in order to thereby modulate the illumination and thereby embed a signal in accordance with coded light techniques which are themselves already known in the art.

The controller 104 may be implemented in the form of software stored in memory of the luminaire 100 and arranged to run on a processor of the luminaire 100 (the memory in which the controller 104 is stored comprising one or more memory units and the processor on which it is arranged to run comprising one or more processing units). Alternatively the controller 104 may be implemented in dedicated hardware circuitry, or configurable or reconfigurable hardware circuitry such as a PGA or FPGA, or any combination of software and hardware.

The detecting equipment 110 comprises a camera 112 and an image processing module 114. The camera 112 is able to capture samples of the modulated illumination at different instances in time. The camera 112 may take the form of a rolling-shutter camera which exposes a given frame line-by-line in a temporal sequence, each line at different moment in time, so as to capture multiple different temporal samples of the modulation in the illumination within a given frame (a given still image). Alternatively the camera 112 may take the form of a global shutter camera which exposes the entire frame at the same time, in which case each frame samples the modulation in the illumination at a different respective time. Note also that even in the case of a rolling-shutter camera, if the message encoded into the signal lasts longer than one frame, then samples from multiple frames may be required. By whatever means the samples are captured, the camera 112 is arranged to output the samples to the image processing module 114 in order for the signal to be decoded from the captured samples, using techniques which are in themselves already known in the art.

The image processing module 114 may be implemented in the form of software stored in memory of the detecting equipment 110 and arranged to run on a processor of the detecting equipment 110 (the memory in which the image processing module 114 is stored comprising one or more memory units and the processor on which it is arranged to run comprising one or more processing units). Alternatively the image processing module 114 may be implemented in dedicated hardware circuitry, or configurable or reconfigurable hardware circuitry such as a PGA or FPGA, or any combination of software and hardware.

The detecting equipment 110 may take the form of a mobile user terminal such as a tablet, smartphone or smartwatch, and the camera 112 may be an integrated camera of the mobile user terminal with the image processing module 114 also being implemented on the same mobile user terminal (e.g. as a suitable light detection "app"). For example the user terminal may be a smartphone or tablet and the camera 112 may be the front-facing camera of the smartphone or tablet. Alternatively the camera 112 may be implemented on a separate physical unit than the image processing module. E.g. the camera 112 may be implemented on a dedicated camera unit or camera peripheral or on a smartphone, tablet or smartwatch, while the image processing module may be implemented on a separate computer unit such as a server, desktop computer or laptop computer, connected to the unit housing the camera 112 via any suitable wired or wireless connection, e.g. a wired connection such as a USB connection, or a wireless connection such as a Wi-Fi or Bluetooth connection, or via a wired or wireless network such as a wireless local area network (e.g. Wi-Fi network) and/or a wired area network or internetwork such as the Internet.

Only one luminaire 100 is shown in Figure 1, but in fact an array of such luminaires 100 (preferably three or more) are concatenated together to form a lighting system, e.g. as shown in Figure 2a. Each of the multiple luminaires 100 is mounted on the supporting surface 101 in a similar manner as described above. Alternatively the luminaires 100 do not have to be mounted on a supporting surface 101, but instead may be mounted to another structure (e.g. a gantry) so as themselves to define a surface or line. Either way, the surface or line may be constrained to a plane or straight-line respectively, i.e. which is flat or may follow a contour which is curved either in one or two dimensions. Typically this plane or contour is that of the ceiling or possibly a wall, and typically the ceiling or wall is flat (a plane), but it is also not excluded that the multiple luminaires 100 could be arranged to confirm to a surface contour, e.g. a curved ceiling or wall, or a curved gantry structure. Note also that the array of luminaires 100 may be one or two dimensional, such that in some embodiments the array extends in both dimensions of the plane or a two-dimensional contour, whereas in some other embodiments the luminaires 100 may be arranged in a straight along a curved line.

Either way, the luminaires 100 are concatenated together in the ID or 2D array such that, within said plane or contour, or along said line, each of the multiple luminaires 100 is adjacent to at least one other of the multiple luminaries 100, sharing a boundary 301 between them. For example the luminaires 100 may be arranged in a 2D rectangular array as shown in Figure 2a or 4, or a ID linear array as shown in Figure 3 or 5.

Further, each of the luminaires 100 is arranged to emit a different respective coded light signal embedded in its respective illumination, for example a unique ID code identifying the respective luminaire within the system, and/or other information specific to the luminaire in question such as a respective location, a time stamp, and/or status report (e.g. reporting burning hours and/or operating temperature, etc.). Note therefore that the signal is not limited to comprising only an ID code. The signals may originate from the respective controllers 104 of the different respective luminaires 100, being generated locally by each in a distributed fashion, or alternatively each controller 104 may generate its signal under control by a central controller (not shown) such as a server. In the latter case the central controller may be connected to the local controller 104 of each of the luminaires 100 by any suitable wired or wireless connection, e.g. via a wireless local area network (WLAN) such as a Wi-Fi, Bluetooth or ZigBee network, or via a wide area network or internetwork such as the Internet.

Thus, as discussed previously, with visible light communication (VLC) or "coded light", the light emitted by the luminaires may carry digital information embedded in a manner that is readable electronically but that is typically invisible to human observers. By using appropriate modulation techniques, it is possible to use a camera 112 e.g. of the type fitted to a smart phone or tablet to decode short messages, such as the identity of the emitting luminaire. This, in turn, enables applications such as indoor positioning or location-dependent services.

To successfully recover information from a luminaire, a certain amount of image processing is required before the demodulation process can take place. One component of this processing is the masking off of a luminaire under study from other parts of the image. This is done principally to avoid interference during demodulation from other light sources, notably other luminaires carrying VLC. For indoor positioning applications, it also helps determine the 'centre of gravity' of the luminaire, which is used to define the luminaire's location.

The masking process requires the ability to accurately and reliably determine the edges of the luminaire under study. This becomes a particular challenge when luminaires 100 are arranged in a contiguous array, be it a two-dimensional array of ceiling tiles or a one-dimensional line of trunk lights. For example, this can be especially so when the luminaires 100 are mounted at a height far from the camera 112. And/or, for aesthetic reasons lighting designers sometimes like to minimize the visibility of junctions 301 between adjacent luminaires 100, and this poses an extra challenge for edge detection. See again for example Figures 4 and 5.

When processing the image of a trunk light luminaire (e.g. see Figure 3 or 5), rolling-shutter lines approximately perpendicular to the long axis of the luminaire 100 are summed to create a one-dimensional vector of brightness values. This is done on a frame-by-frame basis with motion and rotation of the luminaire image compensated for.

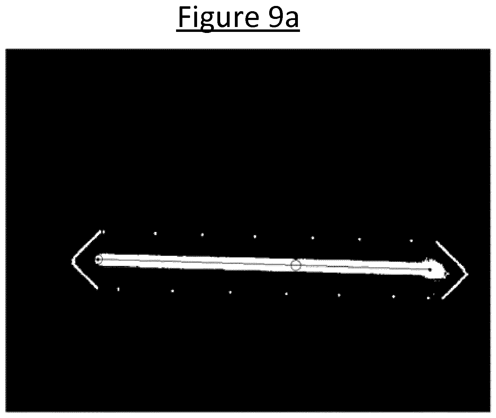

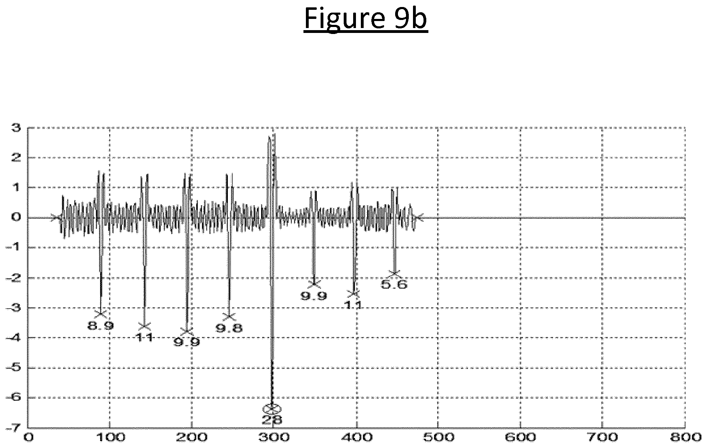

Now, if the brightness vector is averaged over several frames, variations in brightness due to the coded light signal are minimized and what remains are variations in brightness due to the physical construction of the luminaire. These can be seen clearly in the plot shown in Figure 9b, which is derived from the captured image shown in Figure 9a. The plot of Figure 9b shows brightness on the vertical axis and distance along the length of the luminaire on the horizontal axis. As can be seen, there are variations in brightness due to construction of the luminaire. The small amplitude, high frequency variations seen here are due to the individual LEDs; the medium-sized variations are due to the gap between LED boards within the luminaire and the large variation due to the gap between adjacent luminaires, or the inter-luminaire junction (ILJ) 301. This accidental variation is nonetheless very useful in the right circumstances. However, since it is accidental, it cannot be relied upon. Given this, the inventors have recognized that a spatial signal could be deliberately inserted into the luminaire design.

Other luminaires show patterns that are, in general, characteristic of the luminaire construction. One insight the inventors have drawn from this is that these variations are sometimes much more visible to the camera than to the human observer. A further, unexpected insight comes from the shape of the trunk luminaire pattern mentioned above, which exhibits a slight rise in brightness on each side of the dip. This results in a signal that is significantly easier to detect and that is also easier to differentiate from other effects, such as occlusion by a pipe or cable in between the luminaire 100 and the receiver 110. Another observation is that dips due to spacing between LED boards within the luminaire are sometimes only distinguishable from the ILJ 301 by their lower amplitude.

These insights and observation have led the inventors to the idea of including a deliberate, known pattern that has good auto-correlation properties in the light emitted by the luminaries, e.g. placing this pattern at the luminaire endpoints. For example this pattern may be encoded as variations in brightness along the length of the luminaire 100. By detecting an autocorrelation in this pattern from one luminaire 100 to the next, the image processing module can then detect either the luminaires' centres of gravity, or detect the edges between adjacent (regularly-spaced) luminaires if the stored code is shifted by 180 degrees (i.e. if the stored n-bit code is bit-wise rotated by n/2 bits. Thus spatial pattern or code may also be thought of as a "spatial clock" for recovering the hidden periodicity of the luminaires 100 in the array. By trading off amplitude and length, a pattern can be chosen that is easy to detect electronically (perhaps even when partially occluded) but that is essentially invisible to the human observer.

Suppose for example each luminaire 100 carries a correlation pattern ABCD along its length. If the image processing module 114 correlates using this sequence, the correlation peaks mark the luminaire centres. As a variant of this, if the image processing module 114 actually performs a correlation using the circularly-rotated sequence CDAB (which is what is meant by 'shifted by 180 degrees'), this gives peaks that mark the inter-luminaires junctions (ILJs) 301. In either case, once the image processing module 114 thus know the positions of the ILJs 301, it can interpolate the positions of the luminaire centres, and vice versa. In practice, the image processing module may use both the ILJs 301 (to recover the coded light signal) and the luminaire centres (to perform positioning), so the use of ABCD or CDBA is an implementation decision. One advantageous aspect of having the signal cover the whole luminaire is that the image processing module 114 can estimate the position of ILJs 301 and, in some cases, even luminaire centres that are outside the image or otherwise occluded.

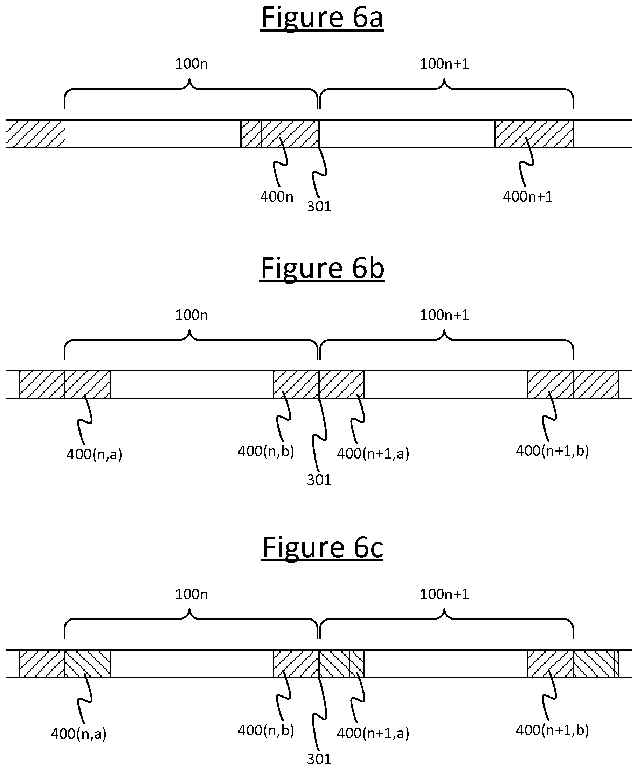

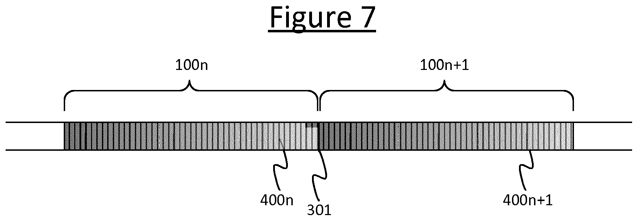

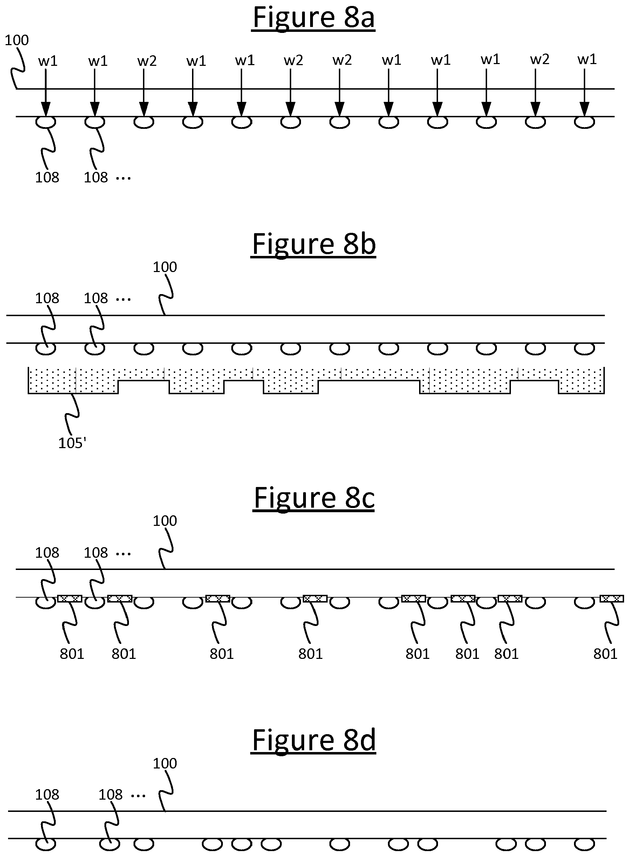

Some examples are shown in Figures 6a-6e and 7, wherein each luminaire 100 emits a respective instance 400n, 400n+1 ... of the same spatial pattern 400 (with a regular spacing across the array of luminaires 100). The pattern 400 is (spatially) modulated into the light emitted by the luminaire 100, and preferably into the same visible illumination that illuminates the environment. A number of techniques for achieving this will be discussed later with reference to Figures 8a to 8d. Preferably this spatial modulation is made sufficiently weak as to be invisible to an average human in the environment 109. Nonetheless, the pattern 400 is strong enough to be detected by the image processing module 114 in one or more of the images captured by the camera 112. The image processing module 114 is configured to determine a location of the end-points of the luminaires 100 by using an auto-correlation calculation applied to the captured images. Preferably this is done based on the auto-correlation between the patterns emitted by adjacent luminaires as appearing in the image. This may be achieved by searching for where in the image the autocorrelation from one luminaire to the next is a maximum. Where the estimated spatial period phase of repetition of the luminaires 100 in the captured image(s) matches the actual values, this will give a peak in the auto-correlation between the instance of the pattern 400n, 400n+1 from one luminaire lOOn to the next 100n+1 in the array.

Thus by detection of this auto-correlation pattern in the captured image(s), then the image-processing module 114 can separate out the light contributions from the different luminaires, and therefore detect their different respective embedded coded light signals from the separated-out contributions. Note that the auto-correlation allows the light from the different luminaires, and therefore the different coded light signals, to be distinguished from one another even when more than one of the luminaires 100 appear simultaneously in the same image or simultaneously in each of a sequence of images capturing the same view of the environment, i.e. even when appearing in the same frame or together in each of the same sequence of frames (that is, falling at the same time in the same frame area or image capture area of the camera's image sensor, from which the images are captured). In the case of a rolling-shutter camera, this may even allow detection of the signals from more than one luminaire appearing simultaneously in the same frame (same single still image).

Note also that in the case of luminaires 100 following a curved line or 2D contour, the image will need to be straightened out by the decoder 114, as otherwise apparent 'clock rate' of the pattern will change as the direction of the tangent changes. Given predetermined knowledge of the contour shape to understand how the pattern is fitted onto it, suitable image-recognition technique are known to a person skilled in the art which can be used by the image processing module 114 to unbend the curve or contour into a line or plane, e.g. based on scale-invariant techniques, and the image processing module may then analyse this unbent image to extract the spatial codes. This gives reason to prefer a pattern that has its own clocking signal within it, as it is then be possible to use the clocking information to help trace the curvature of the line or surface.

Further, note that the camera 112 may be a rolling-shutter camera or a global shutter camera. In the latter case, the spatial pattern may appear in a single frame (single still image). However, in the case of a rolling-shutter camera, the image processing module needs to apply some additional processing to account for the interaction between coded light and the spatial pattern (e.g. in the idle periods). One way to reveal the spatial pattern is by averaging the captured illumination over multiple frames (multiple individual images captured at multiple different respective moments in time), thereby removing the effect of the temporal modulation. I.e. averaging over a few frames suppresses the temporal modulation sufficiently to allow reliable detection of the spatial modulation (and, once this is known, it can be subtracted from the image(s) to enable the quality of detection of the temporal modulation to be improved). Alternatively (or additionally) note that the temporal modulation always appears vertically in the captured image (in the direction or the rolling, perpendicular to the lines of the rolling shutter), no matter what orientation the luminaire 100 has in the image. Therefore as long as the pattern does not appear completely vertically, it is possible to resolve in a horizontal direction (at least partially) to suppress the temporal modulation (or the option of resolving perpendicular to the pattern direction in order to suppress it and resolve the temporal signal is also possible). Another point is that the image processing module knows what to expect from the spatial modulation (it is a predetermined pattern) so its amplitude can be significantly lower than that of the temporal modulation. Thus, there is a balance that enables both the spatial and the temporal modulation to coexist and be individually extracted by the image processing module 114.

Any of the following operations involved in the separation (distinguishing) of the coded light signals from different ones of the luminaires 100, and the detection of those signals based thereon, may be performed by the image processing module 114 based on one or more images captured by the camera 112. For conciseness this will not be repeated each time.

The following describes examples of detecting an auto-correlation pattern encoded as variations in brightness along the length of the luminaire in a ID array, e.g. of trunk lighting as shown in Figures 3 and 5. However, it will be appreciated that the same principle can be extended to a 2D array, e.g. of square luminous ceiling tiles as shown in Figures 2a, 2b and 4.

Autocorrelation is a measure of how similar a signal is to itself at different points in time. By sampling a signal S at regular points in time and calculating the sum of products of points $S_i$ and $S_{i+j}$, where j is a fixed offset, a measure of self-similarity between the signal S and itself offset by j is obtained.

$$\sum_{i=0}^{m-1} s_i \cdot s_{i+j}$$

Ideally, the sum of products, Rj, is a high value when j = 0 and a low value for all other values of j. The difference between the peak height (when j = 0) and heights elsewhere provides correlation gain that allows correlation to be detected reliably even in the presence of noise and interference.

To detect the luminaire end-points based on the auto-correlation the pattern in 1 dimension (i.e. tiling along a single axis), the image processing module 114 is configured to perform the following steps:

form a ID vector of m samples from the luminaire 100 as appearing in the captured image, perpendicular to the length of the trunk (or line);
perform a correlation between the vector of samples and a stored waveform (i.e. the pre-known pattern);
repeat (i) and (ii) starting from multiple different candidate values of j (i.e. multiple different offsets);
the value of j which gives the highest output value of the auto-correlation calculation at (ii) is the offset at which j is aligned with the edge of the (light-emitting part 107 of) the luminaire 100, thus giving the position of the edge in captured the image.

In embodiments there is an additional scaling step applied between (i) and (ii): rescale the vector according to information derived from any of (a) pattern clocking information (predetermined knowledge of the spatial pattern), (b) image dimensions (e.g. width of luminaire in image), and/or (c) angle of orientation of the handset.

For a 2D pattern (tiling along two axes), the above is repeated in each of two perpendicular dimensions in the plane, e.g. in the direction each perpendicular edge for a square luminous tile. For instance, one approach is to arrange two ID codes perpendicular to one another. In one embodiment, codes of length m and n (where it is allowed that m=n) are superimposed perpendicularly in exor mode to create an array of m × n pixels. It is then possible to perform a 2D correlation (could be computationally expensive) or two perpendicular ID correlations. There is a tendency of samples on a row to cancel to zero because of the presence of the perpendicular code, but this can be mitigated by sampling along a narrow strip. In a second embodiment, codes of length m and n, chosen to have the same values in the first and last symbol positions are disposed in strips on two adjacent edges of the tile (a subvariant has them disposed on all four edges); this enables ID sampling without interference from the perpendicular code. Another variant has the codes arranged across each other in a "+" shape: preference is given to codes that share a common symbol at the centre point. To mark corners, the codes could be arranged in an "X" shape instead. As another alternative, a circular code may be used. This has advantages of rotational invariance. One issue with this is that for concentric rings of equal width, the area of each ring increases according to the diameter, but this can be compensated for via one or more of the following: changing ring width, changing modulation depth, and/or adding compensating panels in the unused corners of the lamp.

For curved lines or surfaces, the appearance of the curve may first be "unbent" (flattened out) using image processing techniques, and then the above process applied to the flattened out image. Regarding scaling, in embodiments the image processing 114 module may refer to an approximate scale from analysis of the apparent width of the luminaire 100. Otherwise, scale-invariant transforms can be used. Algorithms for compensating for geometrical distortion are in themselves known to a person skilled in the art. As mentioned, patterns that contain their own clock may prove advantageous for this.

For the present purposes, such a signal may be referred to as an auto-correlation signal or sequence. This auto-correlation signal or sequence is encoded into a spatial modulation of the light emitted from the luminaires 100 so as to form a corresponding spatial pattern. Hence the auto-correlation signal or sequence and the spatial pattern may sometimes be referred to interchangeably (or as will also be discussed later, the spatial pattern may in fact represent one or more such sequences).

Note that the signal, si, is only defined for values of i between 0 and m - 1, meaning that si+j is indeterminate for values of i + j that lie outside this range. The implications of this and possible mitigations are discussed later.

In the field of signal processing, a number of sequences are known that possess good auto-correlation properties. Examples include Barker sequences, maximum length sequences and Gold sequences. As another example, many frame-based communication standards specify a frame alignment word (also known as sync word) of, for example, 8 bits in length, that can be used by the receiver to detect the start of a frame and ensure continued frame synchronization with the transmitter.

According to embodiments of the present disclosure, such an auto-correlation sequence can be used to mark an inter-luminaire junction 301.

Note that while detectable to the image processing module 114 via the image(s) captured by the camera 112, the pattern 400 encoding the auto-correlation sequence into the emitted light is preferably made too weak to be visible or at least noticeable to an average human present in the environment 109. I.e. the energy variations from one symbol to the next in the spatial pattern representing the auto-correlation sequence are too small to be visible or at least noticeable to an average human in the environment 109. The visibility or noticeability to an average person for the present purposes may be defined in any of a number of ways. E.g. the separation 301 between adjacent luminaires 100a, 100b maybe arranged so as to be invisible to a defined percentile from a representative random sample of people (e.g. no more than 1% of the most perceptive people, or no more than 5%). The sample may or may not be restricted to a certain category of people, e.g. intended users of the environment 109, and/or those who are not classified as partially sighted in the jurisdiction in which the environment 109 is located. Alternatively or additionally, the pattern may be designed to meet a different criterion for being invisible, e.g. according to the concept of "just noticeable difference" (JND), also known as "Weber's Law". As will be familiar to a person skilled in the art, Weber's Law states that in the presence of ambient illumination, a temporally stable intensity variation is just noticeable when contrast is about:

$$C = \frac{\Delta I}{I} = \frac{1}{100}$$

This ratio of 1/100 is remarkably stable for a large range of illumination levels. In the context of the present disclosure, I is the output of the luminaire 100 and ΔI is the modulation depth of the pattern. With regard to the colour spectrum (if applicable), a similar condition may be applied for the colour channels in any suitable colour space, e.g. in YUV space the chrominance channels U and V may be arranged to satisfy $\Delta U/U \leq 1/100$ and $\Delta V/V \leq 1/100$; or in RGB space, $\Delta R/R \leq 1/100$, $\Delta G/G \leq 1/100$ and $\Delta B/B \leq 1/100$. Weber's Law is known by many in the field of human factors and ergonomics.

Alternatively or additionally, in other embodiments the pattern may be designed to satisfy another criterion for invisibility relative to the luminaires 100a, 110b. For instance, apart from Weber's Law there also exist other criteria that relate to the apparent size of the brightness variation. These are based on the average human contrast sensitivity related to the dimensions of the contrast variation (e.g. expressed as a contrast threshold expressed as a function of minutes of arc). See for example, "Outdoor Lighting: Physics, Vision and Perception", Duco Schreuder, Springer Science 2008, ISBN: 978-1-4020-8601-4. In general, a skilled person will be aware of various criteria for defining invisibility to human perception.

Various criteria for designing a coded light signal to be invisible to human visual perception will in themselves be known to a person skilled in the art.

Also, in embodiments, the pattern need only be invisible from the perspective of a user standing on the floor whilst the luminaires 100 are mounted at ceiling height in the environment 109 in question (e.g. 5m or more from floor height in a large retail environment).

Further, some arrangements might not actually be invisible in practice, either through imperfect implementation or perhaps as an attempt to make a decorative feature out of whatever the pattern is. Nonetheless, by spreading any such 'boundary signal' energy over all or part of the luminaire's length, it becomes easier to create a reliable signal that may also be less visible.

Examples of a first class of embodiment are depicted in Figures 6a and 6b. Here, the auto-correlation signal (i.e. the spatial pattern) 400 is applied to one end of a luminaire 100 in a manner that permits it to be recovered by a brightness vector averaged over a few frames (the brightness vector being the ID signal obtained by taking one sample from each image line in the case where the camera 112 is a rolling-shutter camera, to obtain one sample per line, e.g. by combining some or all of the pixels within each line). In relation to this, note the ability to trade off signal length versus signal amplitude. By spreading the energy of the auto-correlation signal over a length of the luminaire, the amplitude can be made significantly lower and the signal thereby made essentially invisible to the human observer. Preference might therefore be given to a long signal that can be inserted with low amplitude. This provides several benefits.

One benefit is that the correlation gain and the ability to average the brightness vector over several frames allows the auto-correlation signal to be inserted at a level low enough to be essentially invisible to the human observer. Another benefit is that being able to correlate over part of a long signal enables precise location of a luminaire endpoint even if it is partially or completely occluded by other objects or actually outside the visible frame. This may also be a means of preventing the receiver 110 from incorrectly treating one luminaire 100 as two separate devices. Yet another benefit is that it also becomes easier to distinguish an end point from other artefacts, like inter-board junctions inside the luminaire 100.

In one embodiment of the first class, as shown in Figure 6a, the auto-correlation sequence 400 may be confined to only one end of each luminaire 100. Alternatively in another embodiment of the first class, as shown in Figure 6b, the auto-correlation sequence may distributed over the ends of two adjacent luminaires lOOn, 100n-1. I.e. a first part 400a of the sequence begins in the pattern at one end of a first luminaire 100n, and then the second part 400b of the sequence continues over the adjacent end of the next adjacent luminaire 100n+1 in the array, which has the first part 400a of the pattern at its other end, and so forth.

Examples of a second class of embodiment are depicted in Figures 6c to 6f. Here, the pattern 400 encoded into each luminaire 100 in fact comprises a pair of sequences 400a, 400b, one on each end of the luminaire 100. The luminaire junction 301 is then in between the two sequences 400(n, b); 400(n+1, a). In this case, advantageously, the end of a line of luminaires 100 can be located by using just one of the sequences.

In one embodiment of this class, as shown in Figure 6c, the sequence 400(n, a) at one end is repeated 400(n+1, b) at the other end in the reversed direction (reversed sequences at each end of the luminaire 100).

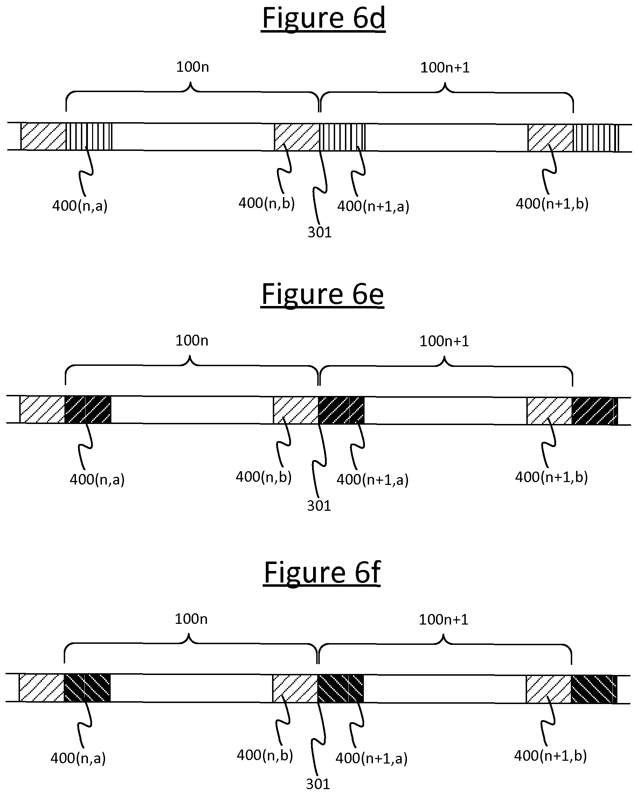

In a second embodiment of the second class, as shown in Figure 6d, different auto-correlation signals 400a, 400b are applied at each end of a luminaire 100, e.g. signals that are completely unrelated to one another. This provides a useful directional cue. If the direction of the camera 112 is known, this directional cue can be used by the image processing module 114 to determine the orientation of the luminaire 100 relative to the building and/or the compass directions. E.g. if the image contains a T-LED (tube LED - an LED lamp that replaces a fluorescent tube), its orientation in the building may be ambiguous as to which side is facing, e.g. North/South. The disambiguation provided by the recognition of the directional cue by the image processing module can thus be useful for example in commissioning. Alternatively if the lighting system is already properly commissioned such that the orientation of the luminaire 100 is already unambiguously known, then the directional cue enables the image processing module to determine the orientation of the camera 112 relative to the luminaire 100, e.g. a compass direction cue, such as to determine whether the camera 112 is looking north or south. Currently fixes from two lamps are needed to obtain heading information. This technique makes it possible to do it from one.

In another embodiment of the second class, as shown in Figure 6e, the sequences 400a, 400b at each end of a given luminaire 100 are complementary forms of one another, which have the property that the sum of their autocorrelations peaks when they are mutually-aligned and is zero everywhere else. Thus, a receiver that performs synchronized correlation with both sequences may obtain better detection performance.

In yet another embodiment of the second class, as shown in Figure 6f, the sequences 400a, 400b at each end of a given luminaire 100 are reversed and inverted forms of one another. Advantageously, this means that the auto-correlation peak may be positive when looking towards one end of the luminaire and negative when looking towards the other end, again providing a directional cue from which the image processing module 114 can determine from what direction the camera 112 is viewing the luminaires 100.

Note: alternative embodiments do not require two sub-patterns at different ends to determine camera direction. Alternatively, the image processing module 114 can determine the direction form one asymmetric pattern is enough. In such embodiments, preferably a pattern is used which produces peaks of different polarities depending on the viewing direction.

A third class of embodiment uses a full-length sequence as depicted in Figure 7, i.e. the sequence 400 extends along the full light-emitting surface 107 of the luminaire 100. In particularly advantageous embodiment of this, the auto-correlation signal is its own inverted, reversed form, meaning that the polarity of the correlation peak determines the direction. Such a signal may be created by inverting the bits of a base signal, reversing them and combining the modified signal to the base signal in some manner. For example, the modified signal may be appended to the base signal or the bits of the modified signal may be interspersed with those of the base signal. Thus again, using such a signal the image processing module 114 can determine what direction the camera 112 is viewing the luminaires 100 from.

The above has assumed that the light is summed over rolling-shutter lines perpendicular (or roughly perpendicular) to the long axis of a linear luminaire 100. However, a number of alternative approaches are possible.

For instance, in one alternative arrangement the auto-correlation signal 400 is confined to a defined region of the luminaire 100, e.g. the centre line. This may be preferable from the point of view of reducing visibility of the signal to the human observer. The brightness vector is then preferably calculated only from this region.

In another alternative arrangement, more than one auto-correlation signal 400 may be placed in parallel. This can enable multiple signal, perhaps with different properties, to be used. In one example, the signals have different 'symbol rates' (symbols per unit distance), allowing the signal with lower symbol rate to be used when distances or angle prevents resolution of the signal with the higher symbol rate. As another example, complementary auto-correlation signals can be used in parallel instead of in series. In this case multiple brightness vectors will need to be calculated.

In another alternative arrangement, a 2D pattern can be used even if the luminaire array is one dimensional. In a preferred embodiment, the 2D pattern is constructed such that when summed along lines perpendicular to the long axis, it resolves into a preferred ID signal of the kind already discussed. The 2D aspect can then be used for other purposes, for example, a second alignment signal or a luminaire serial number.

Alternatively the array may be one dimensional but the spatial pattern may be two-dimensional. For example a circular pattern (which could be a linear pattern wrapped round into a circle) could be centred in the luminaire, perhaps modifying the shape (e.g. ellipse) to better cover the luminaire area. Alternatively, one might place the centre at one corner of a square tile. As an extension of this, the pattern may be straightened out so that now there is a pattern that extends diagonally across the tile.

The possibilities discussed above have different advantages and disadvantages and will be more or less appropriate for different scenarios. The embodiment used (or an appropriate combination of embodiments) may be chosen that offers the best performance trade-off for the scenario at hand.

There are also various line codes which may be used to encode the auto-correlation sequence 400. In data communications, binary information is conveyed over a channel by means of a line code that has properties chosen to suit the channel. Binary data values of 0 and 1 are translated into symbols chosen from a different alphabet and it is these symbols that are transmitted over the channel in place of the binary data.

Numerous line codes exist and can be used for the present purposes, but there are some general forms that are of particular interest for use in embodiments. For instance unipolar line codes (i.e. line codes with symbols 0 and 1), may be easy to implement in the form of material that blocks or absorbs light. As another example, DC-free codes based on bipolar line codes with symbols +1 and -1 (and, in some cases, also 0) maybe advantageous because the mean level of the emitted light and, thus, luminaire efficiency, is not affected. They require means of redistributing light, such as a lensed dust cover. In both cases, a line code that carries clocking information, such as Manchester Encoding or Ternary Manchester Encoding may be particularly advantageous in view of the variation in range and viewing angle and the effect these factors have on the apparent luminaire 100 and code size.

In a particular exemplary embodiment, the auto-correlation sequence is encoded in a bipolar non-return-to-zero (NRZ) format, which uses symbols of +1 and -1 in place of 1 and 0 respectively or vice-versa. Use of other line codes may provide certain advantages, such as clocking information, but may also have an impact on the auto-correlation performance.

The auto-correlation signal maybe binary in nature, and for convenience of description may have been assumed to be so in embodiments above or below. However signals with similar auto-correlation properties can be constructed from alphabets with more than two symbols and could be used here. Likewise, line codes with more than two or three symbols are known and could be used.

Other waveforms may also be used to encode the auto-correlation sequence 400. Other waveforms possess similar auto-correlation qualities and may also be good candidates for the present purposes. One class consists of chirp pulses as used in, for example, FM-CW radar systems.

The following now describes some example techniques for implementing the spatial modulation of the light in order to actually create the light pattern 400 representing the auto-correlation sequence. There are a number of possible methods by which such patterns can be implemented.

A first implementation is depicted in Figure 8a. Here the spatial modulation is achieved by modulating the brightness of the LEDs (or more generally light-emitting elements) 108 as a function of distance in one or two dimensions in the plane or contour of the luminaire array, and/or in the plane or contour of the luminous surface 107. Thus the auto-correlation signal 400 is emitted by controlling the brightness of the LEDs 108 at the appropriate places in order to generate the signal, with different symbols being represented by different brightness levels (or even different combination of brightness levels). Or put another way, a respective weighting w is applied to the brightness level of each of the light-emitting elements 108, with the weighting of some being different from some others, and to thus encode the sequence. E.g. two different weightings w1, w2 may be applied to represent binary symbols, or more than two different weightings may be used in order to represent more complex weightings. Note that the difference between the weightings (e.g. between w1 and w2) is preferably small so that the sequence is not visible to humans. For example w1 may be 1.0 whilst w2 may be 0.95 (or even closer to 1).

This brightness modulation may be implemented in a number of ways. For instance the spatial modulation may be controlled by the luminaire controller 104, in a similar manner to the temporal modulation described previously. E.g. the sequence may be programmed in the factory, during commissioning or in-the-field into an embedded memory of the luminaire 100 accessible by the luminaire controller 104; or maybe downloaded to the luminaire memory from a central controller such as a server or buildings management system (not shown). However as an alternative it is not excluded that the sequence could be hardwired. E.g. a selection of the light-emitting elements 108 are each connected to circuitry which restricts their brightness, and/or a selection of the light-emitting elements 108 are each connected to circuitry which boosts their brightness.

In one preferential embodiment, some LEDs (or light-emitting elements) 108 are brightened as others are dimmed in order to maintain the desired luminous flux.

Note that there are minimum and maximum dimming levels because of the need to support coded-light modulation without breaking through the 0% and 100% barriers, and in embodiments without even reaching one or both of these. Thus, in some practical implementations the luminaires cannot be fully shut off if coded light is needed and cannot reach 100% brightness. If, in addition, the LEDs need to carry the spatial modulation, extra margin may be required or the amplitude (modulation depth) of the coded light signal may have to be reduced. Nonetheless, some other implementations might take advantage of LED binning to produce LED strings that contain an appropriate mix of +Δ% and -Δ% LEDs in order to create the pattern. Or it could be that some luminaire implementations contain individually-addressable LEDs and could, therefore, be programmed to provide spatial modulation that could be changed at will to thwart unauthorised usage or to send secret messages.

A variant of the above techniques is use extra LEDs (not shown) to generate the auto-correlation pattern 400.

A second implementation as depicted in Figure 8b uses a patterned occluder layer 105' to selectively occlude and not-occlude, or to selectively occlude to differing degrees, the light emitted by the luminaire 100 as a function of distance in one or two dimensions in the plane or contour of the luminaire array, and/or in the plane or contour of the luminous surface 107. The occluder layer 105' comprises a patterned occluder or a pattern of occluder elements. For instance, the occludr layere may be implemented by patterning the diffuser 105 of the luminaire 100. Alternatively the occluder layer may comprise a separate semi-transparent layer placed over the luminaire's existing diffuser 105 (e.g. being retrofitted). For instance, the occluder layer 105' may have different semi-transparent regions that block the light to a lesser and greater degree (e.g. different thicknesses of diffuser material) to represent different binary symbols, or even different ternary symbols, etc.

One prior solution uses metal clips placed over inter-luminaire junctions 301 in a trunklight array in order to occlude light from that region and thereby insert a dip that can be detected. This is somewhat crude and also has a potential negative impact on the appearance of the array. The use of an auto-correlation signal allows an occluder layer105' instead to operate by only blocking a small fraction of the transmitted light: that is, it does not need to be completely opaque. Indeed, it is also possible to consider arrangements that redistribute the light, rather than block it. Nevertheless, for some applications, blocking may be sufficient.

As a matter of terminology, the present disclosure refers to any device that blocks or redistributes light so as to create a detectable pattern in an appropriately-configured camera 112 as an occluder. Note also that an occluder may operate over a restricted part of the spectrum or may operate by, for example, modulating the effective colour temperature. In one class of embodiment, the occluder operates in the infra-red region.

Examples ways of implementing an occluder include: an external occluder layer, an internal occluder layer, or an integral part of the dust cover (which may be the diffuser 105). In the case of an external occlude, the occluder may be placed of a part of the luminaire housing 102 such as over a dust cover (which may be the diffuser 105) or, if not present, may be placed directly over the LED array 108. The external occluder layer is advantageous from a retro-fit point of view. As an example of an internal occlude, for luminaires 100 that have a dust cover 105 over the LEDs, the occluder layer can be placed inside the cover and may be designed to then take advantage of optical properties of the dust cover. For example, the occluder layer may be constructed of a carefully-designed lenticular array that uses the light dispersive properties of a translucent cover to avoid changes in appearance of the signal when viewed from different angles. In the case of the occlude layer being an integral part of dustcover 105, then the occluder layer (e.g. the lenticular array described above), can be impressed into the moulding of the cover during manufacture. This approach has the advantage of using no extra components.

A third implementation is depicted in Figure 8c. Here, instead of a patterned occluder layer 105', a patterned reflector layer 801 is used. The reflector layer 801 comprises a patterned reflector or pattern of reflector elements, arranged so as to selectively reflect and not-reflect, or selectively reflect to different degrees, the light emitted by the luminaire 100 as a function of distance in one or two dimensions in the plane or contour of the luminaire array, and/or in the plane or contour of the luminous surface 107. For example luminaires 100 that have a reflector may have a retrofitted occluding layer placed on the reflector or may incorporate the signal in the shape or some other property of the reflector itself.

A fourth implementation is depicted in Figure 8d. Here the spatial modulation is achieved by means of the spacing of LEDs (or more generally light-emitting elements) 108. In this case, the spacing of the LEDs 108 is varied to create small regions of enhanced and reduced brightness in accordance with the desired pattern when viewed through a diffuser 105. Or even if the light from the LEDs 108 does not pass through a diffuser, the dips due to the space between the LEDs are still visible even in the regions of enhanced brightness. The brightness vector then captures the signal as a form of pulse position modulation (LEDs) or pulse width modulation (gaps between LEDs).

Further examples, not shown, are based on this use of non-visible infrared (IR) or ultraviolet (UV) light. For example IR and/or UV can be used to generate a region comprising an infra-red and/or ultraviolet pattern that is still visible to a camera but not to a human observer. This may be implemented my means of extra LEDs, as mentioned previously but with the extra LEDs being infrared or ultraviolet LEDs instead of visible-spectrum LEDs. Or as another example, some of the white LEDs 108 may also emit IR or UV light. Or as yet another example, an occluder layer may be implemented using an IR or UV fluorescent material. There are cameras that support IR as well as visible light detection. While these are mainly currently used for security (and, perhaps, vehicular) applications, it is not excluded that a user device such as a smart phone could also be equipped with such a camera, or the techniques disclosed herein could be applied in other use cases, e.g. where the camera is mounted on a robot. UV may provide some sort of advantage over IR in some situations. For example, where luminaires are operated beneath skylights, it could be that the skylight glass blocks external UV to such an extent that operating in UV provides more reliability than visible or IR modes. White LEDs that use UV to excite phosphors might provide the UV without extra LEDs. Robotics or other devices that can support custom camera modules optimised for UV operation may exploit UV even while human users make do with visible light cameras on their smartphones.

Some receiver considerations are now discussed. Existing receiver algorithms already manage rotation and inter-frame motion of the luminaire image. Aspects that may need additional consideration are the distance and angle between the camera 112 and the luminaire 100 because both will affect the apparent length of the luminaire 100 and, hence, inter-luminaire signal through perspective and parallax effects respectively. This means that the ILJ detection mechanism preferably operates in a scale-invariant fashion. If the apparent luminaire length can be accurately estimated, the ID line can be scaled appropriately. Other techniques may include use of Fourier or Mellin transforms or the use of features within the ILS to provide scaling information. In this respect, use of line codes such as Manchester Encoding or Ternary Manchester may be advantageous because of the inherent clocking information that they contain.

This information may itself be used to help estimate the relative location of luminaire 100 and camera 112.

The resolution and distance of the camera has an impact on the symbol size. For a camera offering 480 pixels in the vertical direction and a corresponding field of view of 42 degrees, the projected pixel size at a planar surface 1m away is approximately 1.6mm and at 10m distance, 16mm. In the latter case, this equates to about 60 pixels per metre length of the luminaire. Since luminaires at such heights are typically longer than this and front-facing cameras offer increasingly-large resolutions, this represents a worst case, which, nevertheless, provides some margin against the effects of foreshortening that may occur if the camera is tilted away from the vertical axis.

Ideally, foreshortening due to camera orientation can be compensated for in order to take into account two effects: firstly, that foreshortening of length will cause the apparent clock frequency to change across the length of the code; and secondly, that foreshortening of width will cause the modulation lines to longer be parallel. The code may be designed to be inherently robust to such errors but it may also be possible to arrange for the receiver to take into account the camera's orientation to provide compensation via an appropriate transformation of the received image(s).

In cases in which the luminaire 100 appears vertically in the received image, there may be confusion of the correlation signal with an emitted coded light signal.

There are a number of ways in which the two may be distinguished, of which the following are examples. In a first example, the correlation signal does not vary with time, therefore averaging over more than one frame will increase the SINR of the correlation signal. As a second example, the two signals may be arranged to share different 'pixel frequency' spaces. Or as a third example, as discussed above the correlation signal may be confined to a certain area of the luminaire (either along length, width or both).

An example application of the invention is in ceiling mounted professional lighting systems, e.g. a planar luminous ceiling solution, or trunk illumination systems for retail environments, where esthetical uniform appearance of the luminaires 100 can be as desirable as the quality of the services such as indoor localization that are enabled by the coded light. As another example application, the invention can be used with luminous textiles as well as with luminous carpets.

It will be appreciated that the above embodiments have been described by way of example only.

For instance, the above has been described in terms of luminaires, but these are not limited to any particular traditional form of luminaire. A luminaire herein is meant to refer to any lighting module comprising at least one fixed or replaceable luminous element and some associated fitting, socket, support and/or housing; with the different luminaires being discrete units or modules, which are capable of being be used individually, but which can also be concatenated together into an array (in embodiments to form apparently continuous surface or trunk). E.g. in the case of a luminaire in the form of a modular luminous ceiling tile, wall tile or floor tile may, the lamp(s) may comprise one or more LEDs and the support comprises a substrate and any connections for mounting the tiles. In other embodiments, as mentioned, the luminaries may be modular sections of a modular trunk lighting system. In embodiments, a given luminaire 100 contains a single driver and single modulator and therefore emits the same code over a single luminous surface, whilst adjacent luminaires 100 emit different codes and are unsynchronised.

Furthermore, it is also possible that techniques disclosed herein are used not to distinguish between the light from different luminaires of an array of concatenated luminaires, but rather to distinguish between the light from different individual segments within a lamp (a lamp being an indivisible lighting to be plugged into or otherwise connected into the supporting structure of a luminaire, wherein the individual segments cannot be separated). In this case the lamp comprises multiple light-emitting elements 108 (e.g. LEDs) divided into two or more subsets each comprising one or more light-emitting elements 108 (e.g. different groups of LEDs within the lamp).

One motivation for arranging different segments of a lamp to emit different coded light signals, may simply be to increase the amount of data emitted from a given lamp. Another application however is to enable the image processing module 114 to determine the orientation of the camera 112 relative to the lamp from an image of that lamp even when only a single lamp is present in the captured image. E.g. if the image processing module 114 is also configured to determine the shape and dimensions of the lamp, it can use image recognition algorithm to determine the distance and angle from which the camera 112 is viewing the lamp. Except the lamp may have a degree of rotational and/or mirror symmetry (e.g. being rectangular or circular), meaning the image recognition algorithm alone cannot disambiguate between two or more possible solutions (e.g. if the lamp is oblong, oval or linear, it will look the same from two different directions; or if it is square it will look the same from four different directions). However, by emitting differently coded light from different sections of the lamp in order to break the symmetry of the shape of the lamp, the image processing module 114 can detect these in different sections in the captured image(s) and thus disambiguate between the different possible views of the lamp. Thus the image processing module 114 is able to determine a distance and angle from which the camera 112 is viewing the lamp, and thus determine a position of the camera 112 relative to the lamp. E.g. given knowledge of the position of the lamp on a map or floor plan, the image processing module 114 can determine the position of the camera on the map or floorplan, e.g. for the purpose of indoor navigation, or providing location-based services. The idea of using coded light segments to break the symmetry of a light source is disclosed in WO2015/000772. By adding the spatial modulation pattern of the present invention, this advantageously allows the segments to be more readily detected and differentiated by the image processing module 114 whilst still allowing the different segments to remain substantially continuous in appearance to a human viewer (not requiring a substantial non-emitting gap in between).

Generally the techniques disclosed herein can apply to distinguishing between the light from any an array of any type of lighting unit, where "lighting unit" may refer to any luminaire, lamp or other luminous device designed for illuminating an environment.

In further variants of the present invention, while in preferred embodiments the multiple lighting units are regularly spaced in the plane or contour in which they are mounted, this is not necessarily the case in all possible embodiments. Moreover, while in preferred embodiments the instances of the spatial pattern repeat regularly in space from each lighting unit in the array to the next, this is also not essential in all possible embodiments. The pattern needs to fit along the length or area of the lighting unit's luminous surface 107, but as long as the image processing module 114 can recover the spatial clock, adjacent lighting units can be different lengths. There may be scaling issues but use of scale-invariant detection techniques and/or self-clocking line codes can be applied in the image processing module 114 to accommodate for these.

In yet further variants, the spatial pattern need not be the same for adjacent lighting units. In this case, the image processing module 114 does not use the auto-correlation between the pattern emitted by one lighting unit and its neighbour, as has been described previously. Rather, the image processing module can detect the position of a given lighting unit in the image based on an auto-correlation between the spatial pattern emitted by that lighting unit and a pre-stored instance of the pattern. This pre-stored instance of the [pattern may be stored in an internal memory of the detecting equipment 110, e.g. in the same user terminal (e.g. internal memory of the smartphone or tablet). Alternatively the pre-stored instance could be stored elsewhere such as a server and accessible to the detecting equipment 110 via a channel other than the coded light, e.g. over a wireless RF network such as a local area network (WLAN) or mobile cellular network. Nonetheless, in embodiments it is preferred to use the auto-correlation from one lighting unit to the next, as this avoids the need for a pre-stored instance of the pattern. If a pre-stored instance is needed, this means the detecting equipment 110 needs to be preprogramed or setup with predetermined knowledge of the pattern or patterns used by the lighting system in the particular environment 109 in question. Whereas using the auto-correlation between instances of the same pattern emitted by different lighting units appearing in the same image, this advantageously means the detecting equipment 110 can potentially be used in any system on an ad-hoc basis, without needing predetermined knowledge of the pattern.

Further, while above it has been described how the spatial patterns is used to for the image processing module 114 to detect and distinguish between a plurality of lighting units in the capture image(s), in embodiments a similar principle of detecting auto-correlation between the pattern emitted by a given lighting unit 100 and a pre-stored instance of the pattern may be used to enable the image processing module 114 to pick out the signal from only a single lighting unit from amongst its neighbours.

Further, it is not essential that the temporally-modulated data-transmitting lighting units are the same lighting units as as the spatially-patterned lighting units. For instance, alternate ones of the lighting units may be luminaires may be spatially modulated with the spatially pattern whilst every other alternate lighting unit in between them may be temporally modulated to transmit the signals. I.e. the system does not mix the two types of modulation. In such cases the decoder 114 can still locate the boundaries between lighting units based on the spatial pattern.

In the embodiments described previously, all the lighting units 100 carry both spatial and temporal modulation. This arrangement is preferable from the point of view of applications like indoor positioning because the more data points available, the more reliable the position fix. However, some applications can tolerate a bit of slack, such as having only every other luminaire emit a signal. Location based services, for example, don't necessarily need every luminaire to emit a signal and can support other arrangements. The spatial modulation is still useful as a means of identifying boundaries, providing orientation information and/or identifying which lighting units are transmitting or not transmitting IDs. For the latter, one may use different spatial patterns for transmitting/non-transmitting luminaires, or alternating temporal/spatial/temporal/spatial modulations.

Another arrangement could have messages sent by every lighting unit and spatial modulation used only every other luminaire. This would allow a manufacturer or installer to obtain robust indoor positioning performance and still gain all the benefits of spatial modulation.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A system comprising:

    an arrangement of contiguously-mounted lighting units (100) arranged to emit light comprising visible illumination into an environment (109);
    transmission circuitry (104) arranged to temporally modulate the visible illumination emitted by each of some or all of the arrangement of lighting units so as to embed a different respective signal into the visible illumination emitted by a data-transmitting luminous area of each, thereby providing multiple data-transmitting lighting units; and
    detecting equipment (110) comprising a camera (112) for capturing images of the data-transmitting luminous areas of one or more of said data-transmitting lighting units, and an image processing module (114) configured to detect the respective signals based on one or more of the captured images;

wherein the system is further configured to spatially modulate at least part of the light emitted by each of one, some or all of the lighting units of said arrangement with a spatial pattern (400), thereby providing one or more spatially-patterned lighting units;

wherein the image processing module of the detecting equipment is configured to distinguish each of said one or more data-transmitting lighting units from amongst the multiple data-transmitting lighting units, and thereby detect the respective signals embedded

in the illumination from said one or more data-transmitting lighting units,

**characterised in that** the distinguishing each of said one or more data-transmitting lighting units from amongst the multiple data-transmitting lighting units is based on an auto correlation of said spatial pattern emitted by said one or more spatially-patterned lighting units appearing in one or more of the captured images.

2.   The system of claim 1, wherein:

the system is configured to spatially modulate at least part of the light emitted by each of some or all of the lighting units of said arrangement with the spatial pattern (400), thereby providing multiple spatially-patterned lighting units;

the system is configured such that said spatial modulation comprises spatially modulating at least part of the light emitted by each of the multiple spatially-patterned lighting units with an instance of the same spatial pattern (400);

the one or more data-transmitting lighting units being detected are a plurality of data-transmitting lighting units; and

the image processing module of the detecting equipment (110) is configured to perform said distinguishing between said plurality of data-transmitting lighting units, and thereby between the different signals embedded in the illumination from said plurality of data-transmitting lighting units, based on the auto correlation between the instances of said spatial pattern emitted by said plurality of data-transmitting lighting units.

3.   The system of claim 1 or 2, wherein each of the spatially-patterned lighting units (100) comprises a respective set of constituent light-emitting elements (108), each of the constituent light-emitting elements in the set being configured to emit a portion of said illumination; and wherein for each of the spatially-patterned lighting units, said spatial modulation is implemented by:

a difference in brightness of the illumination emitted by different ones of the constituent light-emitting elements in the respective set; or

a non-uniform spacing of the constituent light-emitting elements in the respective set.

4.   The system of claim 1 or 2, wherein for each of said spatially-patterned lighting units (100), said spatial modulation is implemented by a spatially patterned occluder (105') or reflector (801) layer disposed over or within lighting unit.

5.   The system of any preceding claim, wherein the spatially-patterned lighting units are the same lighting units as the multiple data-transmitting lighting units, and the spatial pattern covers some or all of the data-transmitting luminous area of each of the multiple data-transmitting lighting units.

6.   The system of claim 5, wherein each of the multiple data-transmitting lighting units (100) has at least two edge regions, each edge region forming a boundary with at least one other of the data-transmitting lighting units, or forming an edge of the arrangement; and wherein for each of the multiple data-transmitting lighting units (100), the spatial pattern is emitted over only a part of the data-transmitting luminous area at one or more of the edge regions.

7.   The system of claim 6, wherein in at least one given dimension the spatial pattern is located at the edge regions at both of two opposing ends of each of the multiple data-transmitting lighting units, with a first sub-pattern at one end and a second sub-pattern at the other end; and wherein one of:

a) the second sub-pattern is a reversed version of the first sub-pattern pattern,
b) the second sub-pattern is unrelated to the first sub-pattern,
c) the second sub-pattern is a complementary version of the first sub-pattern,
d) the second sub-pattern is a reversed and inverted version of the first sub-pattern, or
e) the second sub-pattern is a continuation of the first sub-pattern.

8.   The system of any preceding claim, wherein the spatial pattern is its own reversed form; or the spatial pattern is its own reversed, inverted form.

9.   The system of any preceding claim, wherein the arrangement of contiguously-mounted lighting units is one dimensional but the spatial pattern is two-dimensional.

10.  The system of any preceding claim, wherein said spatial modulation comprises an invisible modulation in the visible illumination.

11. Lighting equipment comprising:

an arrangement of contiguously-mounted lighting units (100) arranged to emit light comprising visible illumination into an environment (109); and

transmission circuitry (104) arranged to temporally modulate the visible illumination emitted by each of some or all of the arrangement of lighting units so as to embed a different respective signal into the visible illumination emitted by a data-transmitting luminous area of each, thereby providing multiple data-transmitting lighting units, wherein the signals are to be detected by detecting equipment (110) comprising a camera (112) for capturing images of the data-transmitting luminous areas of one or more of said multiple data-transmitting lighting units and further comprising an image processing module (114) configured to detect the respective signals based on one or more of the captured images; wherein the transmission circuitry (104) is further configured to spatially modulate at least part of the light emitted by each of some or all of the multiple lighting units of said arrangement with a spatial pattern (400), thereby providing one or more spatially-patterned lighting units, such that the image processing module of the detecting equipment can distinguish each of said one or more data-transmitting lighting units from amongst the multiple data-transmitting lighting units, and thereby detect the respective signals embedded in the illumination from said one or more data-transmitting lighting units, **characterised in that** the distinguishing each of said one or more data-transmitting lighting units from amongst the multiple data-transmitting lighting units is based on an auto correlation of said spatial pattern emitted by said one or more spatially-patterned lighting units appearing in one or more of the captured images.

12. Detecting equipment (101) for use with an arrangement of contiguously-mounted lighting units (100) arranged to emit light comprising visible illumination into an environment (109), the visible illumination emitted by each of some or all of the arrangement of lighting units being temporally modulated so as to embed a different respective signal into the visible illumination emitted by a data-transmitting luminous area of each, thereby providing multiple data-transmitting lighting units, wherein at least part of the light emitted by each of one or more of the arrangement of lighting units is also spatially modulated with a spatial pattern (400), thereby providing one or more spatially-patterned lighting units; the detecting equipment comprising:

a camera (112) for capturing images of the data-transmitting luminous areas of one or more of said multiple data-transmitting lighting units; and an image processing module (114) configured to detect the respective signals based on one or more of the captured images; wherein the image processing module of the detecting equipment is configured to distinguish each of said one or more data-transmitting lighting units from amongst the multiple data-transmitting lighting units, and thereby detect the respective signals embedded in the illumination from said one or more data-transmitting lighting units, **characterised in that** the distinguishing each of said one or more data-transmitting lighting units from amongst the multiple data-transmitting lighting units is based on an auto correlation of said spatial pattern emitted by said one or more spatially-patterned lighting units appearing in one or more of the captured images.

13. A method of emitting illumination comprising:

operating an arrangement of contiguously-mounted lighting units (100) to emit light comprising visible illumination into an environment (109); temporally modulating the visible illumination emitted by each of some or all of the arrangement of lighting units so as to embed a different respective signal into the visible illumination emitted by a data-transmitting luminous area of each, thereby providing multiple data-transmitting lighting units, wherein the signals are to be detected by detecting equipment (110) comprising a camera (112) for capturing images of the data-transmitting luminous areas of one or more of said multiple data-transmitting lighting units and further comprising an image processing module (114) configured to detect the respective signals based on one or more of the captured images; and spatially modulating at least part of the light emitted by each of one or more of the lighting units of said arrangement with a spatial pattern (400), thereby providing one or more spatially-patterned lighting units, such that the image processing module of the detecting equipment can distinguish each of said one or more data-transmitting lighting units from amongst the multiple data-transmitting lighting units, and thereby detect the respective signals embedded in the illumination from said one or more data-transmitting lighting units, **characterised in that** the distinguishing each of said one or more data-transmitting lighting units from amongst the multiple data-transmitting lighting units is based on an auto correlation of said spatial pattern emitted by said one or more spatially-patterned lighting units appearing in one or more of the captured images.

14. A method of detecting coded light from an arrangement of contiguously-mounted lighting units (100) arranged to emit light comprising visible illumination into an environment (109), the visible illumination emitted by each of some or all of the arrangement of lighting units being temporally modulated so as to embed a different respective signal into the visible illumination emitted by a data-transmitting luminous surface of each, thereby providing multiple data-transmitting lighting units, wherein at least part of the light emitted by each of one or more of the arrangement of lighting units is also spatially modulated with a spatial pattern (400), thereby providing one or more spatially-patterned lighting units; the method comprising:

using a camera (112) to capture one or more images of the data-transmitting luminous areas of one or more of said multiple data-transmitting lighting units; and
detecting the respective signals based on one or more of the captured images;
wherein said detecting comprises distinguishing each of said one or more data-transmitting lighting units from amongst the multiple data-transmitting lighting units, and thereby detecting the respective signals embedded in the illumination from said one or more data-transmitting lighting units,
**characterised in that** the distinguishing each of said one or more data-transmitting lighting units from amongst the multiple data-transmitting lighting units is based on an auto correlation of said spatial pattern emitted by said one or more spatially-patterned lighting units appearing in one or more of the captured images.

15. A computer program product for detecting coded light from an arrangement of contiguously-mounted lighting units (100) arranged to emit light comprising visible illumination into an environment (109), the visible illumination emitted by each of some or all of the arrangement of lighting units being temporally modulated so as to embed a different respective signal into the visible illumination emitted by a data-transmitting luminous surface of each, thereby providing multiple data-transmitting lighting units, wherein at least part of the light emitted by each of one or more of the arrangement of lighting units is also spatially modulated with a spatial pattern (400), thereby providing one or more spatially-patterned lighting units; the computer program product comprising code embodied on computer-readable storage and which, when the code is executed by a computer, causes the computer to carry out the following operations:

receiving one or more images, captured by a camera (112), of the data-transmitting luminous areas of one or more of said multiple data-transmitting lighting units; and
detecting the respective signals based on one or more of the captured images;
wherein said detecting comprises distinguishing each of said one or more data-transmitting lighting units from amongst the multiple data-transmitting lighting units, and thereby detecting the respective signals embedded in the illumination from said one or more data-transmitting lighting units,
**characterised in that** the distinguishing each of said one or more data-transmitting lighting units from amongst the multiple data-transmitting lighting units is based on an auto correlation of said spatial pattern emitted by said one or more spatially patterned lighting units appearing in one or more of the captured images.

**Patentansprüche**

1. System, umfassend:

eine Anordnung von aneinandergrenzend angebrachten Beleuchtungseinheiten (100), die so angeordnet sind, dass sie Licht mit sichtbarer Illumination in eine Umgebung (109) emittieren;
eine Lichtübertragungsschaltung (104), die so eingerichtet ist, dass sie die von jeder von einigen oder allen der Anordnung von Beleuchtungseinheiten emittierte sichtbare Illumination so temporal moduliert, dass ein anderes jeweiliges Signal in die sichtbare Illumination, die von einer datenübertragenden Leuchtfläche einer jeden abgestrahlt wird, eingebettet wird, wodurch multiple datenübertragende Beleuchtungseinheiten vorgesehen werden; sowie
eine Erfassungseinrichtung (110) mit einer Camera (112) zum Erfassen von Bildern der datenübertragenden Leuchtflächen von einer oder mehreren dieser datenübertragenden Beleuchtungseinheiten sowie einem Bildverarbeitungsmodul (114), das so konfiguriert ist, dass es die jeweiligen Signale aufgrund von einem oder mehreren der erfassten Bilder detektiert;
wobei das System weiterhin so konfiguriert ist, dass es zumindest einen Teil des Lichts, das von jeder von einer, einigen oder allen der Beleuchtungseinheiten dieser Anordnung abgestrahlt wird, mit einer räumlichen Struktur (400) räumlich moduliert, wodurch eine oder mehrere räumlich strukturierte Beleuchtungseinheiten vorgesehen werden;

wobei das Bildverarbeitungsmodul der Erfassungseinrichtung so konfiguriert ist, dass es jede dieser einen oder mehreren datenübertragenden Beleuchtungseinheiten unter den multiplen datenübertragenden Beleuchtungseinheiten eindeutig erkennt und dadurch die in der Illumination eingebetteten jeweiligen Signale von dieser einen oder mehreren datenübertragenden Beleuchtungseinheiten detektiert, **dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

2. System nach Anspruch 1, wobei:

das System so konfiguriert ist, dass es zumindest einen Teil des von jeder von einigen oder allen der Beleuchtungseinheiten dieser Anordnung emittierten Lichts mit der räumlichen Struktur (400) räumlich moduliert, wodurch multiple räumlich strukturierte Beleuchtungseinheiten vorgesehen werden;

das System so konfiguriert ist, dass diese räumliche Modulation das räumliche Modulieren von zumindest einem Teil des von jeder der multiplen räumlich strukturierten Beleuchtungseinheiten emittierten Lichts mit einer Instanz der gleichen räumlichen Struktur (400) umfasst;

es sich bei der detektierten einen oder mehreren datenübertragenden Beleuchtungseinheiten um eine Vielzahl von datenübertragenden Beleuchtungseinheiten handelt; und

das Bildverarbeitungsmodul der Erfassungseinrichtung (110) so konfiguriert ist, dass es dieses Unterscheiden zwischen dieser Vielzahl von datenübertragenden Beleuchtungseinheiten und dadurch zwischen den in der Illumination eingebetteten, verschiedenen Signalen von dieser Vielzahl von datenübertragenden Beleuchtungseinheiten aufgrund der Autokorrelation zwischen den Instanzen dieser, von dieser Vielzahl von datenübertragenden Beleuchtungseinheiten emittierten, räumlichen Struktur durchführt.

3. System nach Anspruch 1 oder 2, wobei jede der räumlich-strukturierten Beleuchtungseinheiten (100) einen jeweiligen Satz von einen Teil bildenden, lichtemittierenden Elementen (108) umfasst, wobei jedes der einen Teil bildenden, lichtemittierenden Elemente in dem Satz so konfiguriert ist, dass es einen Teil dieser Illumination emittiert; und wobei bei jedem der räumlich strukturierten Beleuchtungselemente diese räumliche Modulation implementiert wird durch:

einen Unterschied in der Helligkeit der von verschiedenen der einen Teil bildenden, lichtemittierenden Elemente in dem jeweiligen Satz emittierten Illumination; oder

einen ungleichmäßigen Abstand der einen Teil bildenden, lichtemittierenden Elemente in dem jeweiligen Satz.

4. System nach Anspruch 1 oder 2, wobei bei jeder dieser räumlich strukturierten Beleuchtungseinheiten (100) diese räumliche Modulation durch eine über oder innerhalb der Beleuchtungseinheit angeordnete, räumlich strukturierte Okkluder-(105') oder Reflektor- (801) Schicht implementiert wird.

5. System nach einem der vorangegangenen Ansprüche, wobei die räumlich strukturierten Beleuchtungseinheiten die gleichen Beleuchtungseinheiten wie die multiplen datenübertragenden Beleuchtungseinheiten sind und die räumliche Struktur einen Teil oder die gesamte datenübertragende Leuchtfläche von jeder der multiplen datenübertragenden Beleuchtungseinheiten bedeckt.

6. System nach Anspruch 5, wobei jede der multiplen datenübertragenden Beleuchtungseinheiten (100) mindestens zwei Randbereiche aufweist, wobei jeder Randbereich eine Grenze zu mindestens einer anderen der datenübertragenden Beleuchtungseinheiten bildet oder einen Rand der Anordnung bildet; und wobei bei jeder der multiplen datenübertragenden Beleuchtungseinheiten (100) die räumliche Struktur über nur einen Teil der datenübertragenden Leuchtfläche an einem oder mehreren der Randbereiche emittiert wird.

7. System nach Anspruch 6, wobei bei mindestens einer vorgegebenen Dimension die räumliche Struktur an den Randbereichen an beiden von zwei gegenüberliegenden Enden von jeder der multiplen datenübertragenden Beleuchtungseinheiten mit einer ersten Substruktur an einem Ende und einer zweiten Substruktur an dem anderen Ende angeordnet ist; und wobei auf eine der Folgenden zutrifft:

a) die zweite Substruktur ist eine umgekehrte Version der ersten Substruktur,
b) die zweite Substruktur steht in keinem Zusammenhang mit der ersten Sub struktur,
c) die zweite Substruktur ist eine komplementäre Version der ersten Sub struktur,
d) die zweite Substruktur ist eine umgekehrte und invertierte Version der ersten Sub struktur oder

e) die zweite Substruktur ist eine Fortführung der ersten Substruktur.

8. System nach einem der vorangegangenen Ansprüche, wobei die räumliche Struktur ihre eigene umgekehrte Form ist oder die räumliche Struktur ihre eigene umgekehrte, invertierte Form ist.

9. System nach einem der vorangegangenen Ansprüche, wobei die Anordnung von aneinandergrenzend angebrachten Beleuchtungseinheiten eindimensional ist, die räumliche Struktur jedoch zweidimensional ist.

10. System nach einem der vorangegangenen Ansprüche, wobei diese räumliche Modulation eine unsichtbare Modulation in der sichtbaren Illumination umfasst.

11. Beleuchtungseinrichtung, umfassend:

eine Anordnung von aneinandergrenzend angebrachten Beleuchtungseinheiten (100), die so angeordnet sind, dass sie Licht mit sichtbarer Illumination in eine Umgebung (109) emittieren; sowie

eine Übertragungsschaltung (104), die so eingerichtet ist, dass sie die von jeder von einigen oder allen der Anordnung von Beleuchtungseinheiten emittierten sichtbare Illumination temporal so moduliert, dass ein anderes jeweiliges Signal in die sichtbare Illumination, die von einer datenübertragenden Leuchtfläche einer jeden abgestrahlt wird, eingebettet wird, wodurch multiple datenübertragende Beleuchtungseinheiten vorgesehen werden, wobei die Signale von einer Erfassungseinrichtung (110) zu detektieren sind, die eine Camera (112) zum Erfassen von Bildern der datenübertragenden Leuchtflächen von einer oder mehreren dieser multiplen datenübertragenden Beleuchtungseinheiten zu detektieren sind und weiterhin ein Bildverarbeitungsmodul (114) umfasst, das so konfiguriert ist, dass es die jeweiligen Signale aufgrund von einem oder mehreren der erfassten Bilder detektiert;

wobei die Übertragungsschaltung (104) weiterhin so konfiguriert ist, dass sie zumindest einen Teil des Lichts, das von jeder von einigen oder allen der multiplen Beleuchtungseinheiten dieser Anordnung abgestrahlt wird, mit einer räumlichen Struktur (400) räumlich moduliert, wodurch eine oder mehrere räumlich strukturierte Beleuchtungseinheiten vorgesehen werden, so dass das Bildverarbeitungsmodul der Erfassungseinrichtung jede dieser einen oder mehreren datenübertragenden Beleuchtungseinheiten unter den multiplen datenübertragenden Beleuchtungseinheiten eindeutig erkennen kann und dadurch die in der Illumination eingebetteten jeweiligen Signale von dieser einen oder mehreren datenübertragenden Beleuchtungseinheiten detektiert,

**dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

12. Erfassungseinrichtung (101) zur Verwendung bei einer Anordnung von aneinandergrenzend angebrachten Beleuchtungseinheiten (100), die so angeordnet sind, dass sie Licht mit sichtbarer Illumination in eine Umgebung (109) emittieren, wobei die von jeder von einigen oder allen der Anordnung von Beleuchtungseinheiten emittierte, sichtbare Illumination temporal so moduliert wird, dass ein anderes jeweiliges Signal in die sichtbare Illumination, die von einer datenübertragenden Leuchtfläche einer jeden abgestrahlt wird, eingebettet wird, wodurch multiple datenübertragende Beleuchtungseinheiten vorgesehen werden, wobei zumindest ein Teil des Lichts, das von jeder von einer oder mehreren der Beleuchtungseinheiten dieser Anordnung abgestrahlt wird, mit einer räumlichen Struktur (400) ebenfalls räumlich moduliert wird, wodurch eine oder mehrere räumlich strukturierte Beleuchtungseinheiten vorgesehen werden; wobei die Erfassungseinrichtung umfasst:

eine Camera (112) zum Erfassen von Bildern der datenübertragenden Leuchtflächen von einer oder mehreren dieser multiplen datenübertragenden Beleuchtungseinheiten; sowie ein Bildverarbeitungsmodul (114), das so konfiguriert ist, dass es die jeweiligen Signale aufgrund von einem oder mehreren der erfassten Bilder detektiert;

wobei das Bildverarbeitungsmodul der Erfassungseinrichtung so konfiguriert ist, dass es jede dieser einen oder mehreren datenübertragenden Beleuchtungseinheiten unter den multiplen datenübertragenden Beleuchtungseinheiten eindeutig erkennt und dadurch die in der Illumination eingebetteten jeweiligen Signale von dieser einen oder mehreren datenübertragenden Beleuchtungseinheiten detektiert, **dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

13. Verfahren zur Abstrahlung von Illumination, das beinhaltet, dass:

eine Anordnung von aneinandergrenzend angebrachten Beleuchtungseinheiten (100) so betrieben wird, dass sie Licht mit sichtbarer Illumination in eine Umgebung (109) emittiert; die von jeder von einigen oder allen der Anordnung von Beleuchtungseinheiten emittierte sichtbare Illumination so temporal moduliert wird, dass ein anderes jeweiliges Signal in die sichtbare Illumination, die von einer datenübertragenden Leuchtfläche einer jeden abgestrahlt wird, eingebettet wird, wodurch multiple datenübertragende Beleuchtungseinheiten vorgesehen werden, wobei die Signale durch eine Erfassungseinrichtung (110) zu detektieren sind, die eine Camera (112) zum Erfassen von Bildern der datenübertragenden Leuchtflächen von einer oder mehreren dieser multiplen datenübertragenden Beleuchtungseinheiten und weiterhin ein Bildverarbeitungsmodul (114) umfasst, das so konfiguriert ist, dass es die jeweiligen Signale aufgrund von einem oder mehreren der erfassten Bilder detektiert; und zumindest ein Teil des Lichts, das von jeder von einer oder mehreren der Beleuchtungseinheiten dieser Anordnung abgestrahlt wird, mit einer räumlichen Struktur (400) räumlich moduliert wird, wodurch eine oder mehrere räumlich strukturierte Beleuchtungseinheiten vorgesehen werden, so dass das Bildverarbeitungsmodul der Erfassungseinrichtung jede dieser einen oder mehreren datenübertragenden Beleuchtungseinheiten unter den multiplen datenübertragenden Beleuchtungseinheiten eindeutig erkennen kann und dadurch die in der Illumination eingebetteten jeweiligen Signale von dieser einen oder mehreren datenübertragenden Beleuchtungseinheiten detektiert, **dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

14. Verfahren zum Detektieren von codiertem Licht von einer Anordnung von aneinandergrenzend angebrachten Beleuchtungseinheiten (100), die so angeordnet sind, dass sie Licht mit sichtbarer Illumination in eine Umgebung (109) emittieren, wobei die von jeder von einigen oder allen der Beleuchtungseinheiten der Anordnung emittierte sichtbare Illumination temporal so moduliert wird, dass ein anderes jeweiliges Signal in die von einer datenübertragenden Leuchtfläche einer jeden emittierte, sichtbare Illumination eingebettet wird, wodurch multiple datenübertragende Beleuchtungseinheiten vorgesehen werden, wobei zumindest ein Teil des Lichts, das von jeder von einer oder mehreren der Beleuchtungseinheiten dieser Anordnung abgestrahlt wird, mit einer räumlichen Struktur (400) ebenfalls räumlich moduliert wird, wodurch eine oder mehrere räumlich strukturierte Beleuchtungseinheiten vorgesehen werden; wobei das Verfahren beinhaltet, dass:

eine Camera (112) zum Erfassen von Bildern der datenübertragenden Leuchtflächen von einer oder mehreren dieser multiplen datenübertragenden Beleuchtungseinheiten verwendet wird; und die jeweiligen Signale aufgrund von einem oder mehreren der erfassten Bilder detektiert werden; wobei dieses Detektieren das eindeutige Erkennen von jeder dieser einen oder mehreren datenübertragenden Beleuchtungseinheiten unter den multiplen datenübertragenden Beleuchtungseinheiten umfasst und dadurch die jeweiligen Signle detektiert werden, die in der Illumination von dieser einen oder mehreren datenübertragenden Beleuchtungseinheiten eingebettet sind, **dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

15. Computerprogrammprodukt zum Detektieren von codiertem Licht von einer Anordnung von aneinandergrenzend angebrachten Beleuchtungseinheiten (100), die so angeordnet sind, dass sie Licht mit sichtbarer Illumination in eine Umgebung (109) emittieren, wobei die von jeder von einigen oder allen der Beleuchtungseinheiten der Anordnung emittierte sichtbare Illumination temporal so moduliert wird, dass ein anderes jeweiliges Signal in die von einer datenübertragenden Leuchtfläche einer jeden emittierte, sichtbare Illumination eingebettet wird, wodurch multiple datenübertragende Beleuchtungseinheiten vorgesehen werden, wobei zumindest ein Teil des Lichts, das von jeder von einer oder mehreren der Beleuchtungseinheiten dieser Anordnung abgestrahlt wird, mit einer räumlichen Struktur (400) ebenfalls räumlich moduliert wird, wodurch eine oder mehrere räumlich strukturierte Beleuchtungseinheiten vorgesehen werden; wobei das Computerprogrammprodukt einen auf einem computerlesbaren Speicher verkörperten Code umfasst und, wenn der Code durch einen Computer ausgeführt wird, den Computer veranlasst, die folgenden Operationen auszuführen, wonach:

ein oder mehrere von einer Camera (112) erfasste Bilder der datenübertragenden Leuchtflächen einer oder mehrerer dieser multiplen datenübertragenden Beleuchtungseinheiten empfangen werden; und

die jeweiligen Signale aufgrund eines oder mehrerer der erfassten Bilder detektiert werden; wobei dieses Detektieren das eindeutige Erkennen von jeder dieser einen oder mehreren datenübertragenden Beleuchtungseinheiten unter den multiplen datenübertragenden Beleuchtungseinheiten umfasst und dadurch die jeweiligen Signale detektiert werden, die in der Illumination von dieser einen oder mehreren datenübertragenden Beleuchtungseinheiten eingebettet sind, **dadurch gekennzeichnet, dass** das eindeutige Erkennen von jeder dieser einen oder mehreren datenübertragenden Beleuchtungseinheiten unter den multiplen datenübertragenden Beleuchtungseinheiten auf einer Autokorrelation dieser, von dieser einen oder mehreren räumlich strukturierten Beleuchtungseinheiten emittierten räumlichen Struktur basiert, die in einem oder mehreren der erfassten Bilder auftritt.

**Revendications**

1. Système comprenant :

un agencement d'unités d'éclairage montées de manière contiguë (100) agencé pour émettre de la lumière comprenant un éclairage visible dans un environnement (109) ;
un ensemble de circuits de transmission (104) agencés pour moduler dans le temps l'éclairage visible émis par chacune d'une partie ou de la totalité de l'agencement d'unités d'éclairage de sorte à intégrer un signal respectif différent dans l'éclairage visible émis par une zone lumineuse transmettant des données de chacune d'elles, fournissant ainsi des unités d'éclairage transmettant des données multiples ; et
un équipement de détection (110) comprenant une caméra (112) pour capturer des images des zones lumineuses transmettant des données d'une ou de plusieurs desdites unités d'éclairage transmettant des données, et un module de traitement d'image (114) configuré pour détecter les signaux respectifs sur la base d'une ou de plusieurs des images capturées ;
dans lequel le système est configuré en outre pour moduler dans l'espace au moins une partie de la lumière émise par chacune d'une, d'une partie ou de la totalité des unités d'éclairage dudit agencement avec un motif spatial (400), fournissant ainsi une ou plusieurs unités d'éclairage à motif spatial ;
dans lequel le module de traitement d'image de l'équipement de détection est configuré pour distinguer chacune desdites une ou plusieurs unités d'éclairage transmettant des données parmi les unités d'éclairage transmettant des données multiples, et pour détecter ainsi les signaux respectifs intégrés dans l'éclairage desdites une ou plusieurs unités d'éclairage transmettant des données,
**caractérisé en ce que** la distinction de chacune desdites une ou plusieurs unités d'éclairage transmettant des données parmi les unités d'éclairage transmettant des données multiples est basée sur une autocorrélation dudit motif spatial émis par lesdites une ou plusieurs unités d'éclairage à motif spatial apparaissant sur une ou plusieurs des images capturées.

2. Système selon la revendication 1, dans lequel :

le système est configuré pour moduler dans l'espace au moins une partie de la lumière émise par chacune d'une partie ou de la totalité des unités d'éclairage dudit agencement avec le motif spatial (400), fournissant ainsi des unités d'éclairage à motif spatial multiples ;
le système est configuré de telle sorte que ladite modulation spatiale comprend la modulation dans l'espace d'au moins une partie de la lumière émise par chacune des unités d'éclairage à motif spatial multiple avec une instance du même motif spatial (400) ;
les une ou plusieurs unités d'éclairage transmettant des données étant détectées sont une pluralité d'unités d'éclairage transmettant des données ; et
le module de traitement d'image de l'équipement de détection (110) est configuré pour réaliser ladite distinction entre ladite pluralité d'unités d'éclairage transmettant des données, et ainsi entre les différents signaux intégrés dans l'éclairage de ladite pluralité d'unités d'éclairage transmettant des données, sur la base de l'autocorrélation entre les instances dudit motif spatial émis par ladite pluralité d'unités d'éclairage transmettant des données.

3. Système selon la revendication 1 ou 2, dans lequel chacune des unités d'éclairage à motif spatial (100) comprend un ensemble respectif d'éléments constitutifs électroluminescents (108), chacun des éléments constitutifs électroluminescents dans l'ensemble étant configuré pour émettre une partie dudit éclairage ; et dans lequel pour chacune des unités d'éclairage à motif spatial, ladite modulation spatiale est mise en œuvre par :

une différence de luminosité de l'éclairage émis par des éléments différents des éléments électroluminescents constitutifs différents dans l'ensemble respectif ; ou
un espacement non uniforme des éléments électroluminescents constitutifs dans l'ensemble respectif.

4. Système selon la revendication 1 ou 2, dans lequel pour chacune desdites unités d'éclairage à motif spatial (100), ladite modulation spatiale est mise en œuvre par un obturateur à motif spatial (105') ou une couche de réflecteur (801) disposée sur ou à l'intérieur de l'unité d'éclairage.

5. Système selon l'une quelconque des revendications précédentes, dans lequel les unités d'éclairage à motif spatial sont les mêmes unités d'éclairage que les unités d'éclairage transmettant des données multiples, et le motif spatial recouvre une partie ou la totalité de la zone lumineuse transmettant des données de chacune des unités d'éclairage transmettant des données multiples.

6. Système selon la revendication 5, dans lequel chacune des unités d'éclairage transmettant des données multiples (100) présente au moins deux régions de bordure, chaque région de bordure formant une frontière avec au moins une autre des unités d'éclairage transmettant des données , ou formant une bordure de l'agencement ; et dans lequel pour chacune des unités d'éclairage transmettant des données multiples (100), le motif spatial est émis sur uniquement une partie de la zone lumineuse transmettant des données au niveau d'une ou de plusieurs des régions de bordure.

7. Système selon la revendication 6, dans lequel dans au moins une dimension donnée, le motif spatial est situé au niveau des régions de bordure au niveau des deux extrémités opposées de chacune des unités d'éclairage transmettant des données multiples, avec un premier sous-motif au niveau d'une extrémité et un second sous-motif au niveau de l'autre extrémité ; et dans lequel l'un parmi :

a) le second sous-motif est une version inversée du premier motif de sous-motif,
b) le second sous-motif est sans rapport avec le premier sous-motif,
c) le second sous-motif est une version complémentaire du premier sous-motif,
d) le second sous-motif est une version inversée ou retournée du premier sous-motif, ou
e) le second sous-motif est une continuité du premier sous-motif.

8. Système selon l'une quelconque des revendications précédentes, dans lequel le motif spatial est sa propre forme inversée ; ou le motif spatial est sa propre forme inversée, retournée.

9. Système selon l'une quelconque des revendications précédentes, dans lequel l'agencement d'unités d'éclairage montées de manière contiguë est unidimensionnel mais le motif spatial est bidimensionnel.

10. Système selon l'une quelconque des revendications précédentes, dans lequel ladite modulation spatiale comprend une modulation invisible dans l'éclairage visible.

11. Équipement d'éclairage comprenant :

un agencement d'unités d'éclairage montées de manière contiguë (100) agencé pour émettre de la lumière comprenant un éclairage visible dans un environnement (109) et;
des circuits de transmission (104) agencés pour moduler dans le temps l'éclairage visible émis par chacune d'une partie ou de la totalité de l'agencement d'unités d'éclairage de sorte à intégrer un signal respectif différent dans l'éclairage visible émis par une zone lumineuse transmettant des données de chaque d'elle, fournissant ainsi des unités d'éclairage transmettant des données multiples, dans lequel les signaux doivent être détectés par l'équipement de détection (110) comprenant une caméra (112) pour capturer des images des zones lumineuses transmettant des données d'une ou de plusieurs desdites unités d'éclairage transmettant des données multiples et comprenant en outre un module de traitement d'image (114) configuré pour détecter les signaux respectifs sur la base d'une ou de plusieurs des images capturées ; dans lequel les circuits de transmission (104) sont configurés en outre pour moduler dans l'espace au moins une partie de la lumière émise par chacune d'une partie ou de la totalité des unités d'éclairage multiples dudit agencement avec un motif spatial (400), fournissant ainsi une ou plusieurs unités d'éclairage à motif spatial, de telle sorte que le module de traitement d'image de l'équipement de détection peut distinguer chacune desdites une ou plusieurs unités d'éclairage transmettant des données parmi les unités d'éclairage transmettant des données multiples, et détecter ainsi les signaux respectifs intégrés dans l'éclairage desdites une ou plusieurs unités d'éclairage transmettant des données,

**caractérisé en ce que** la distinction de chacune desdites une ou plusieurs unités d'éclairage transmettant des données parmi les unités d'éclairage transmettant des données multiples est basée une autocorrélation dudit motif spatial émis par lesdites une ou plusieurs unités d'éclairage à motif spatial apparaissant sur une ou plusieurs des images capturées.

**12.** Equipement de détection (101) destiné à être utilisé avec un agencement d'unités d'éclairage montées de manière contiguë (100) agencé pour émettre de la lumière comprenant un éclairage visible dans un environnement (109), l'éclairage visible émis par chacune d'une partie ou de la totalité de l'agencement d'unités d'éclairage étant modulé dans le temps de sorte à intégrer un signal respectif différent dans l'éclairage visible émis par une zone lumineuse transmettant des données de chacune d'elles, fournissant ainsi des unités d'éclairage transmettant des données multiples, dans lequel au moins une partie de la lumière émise par chacune des une ou plusieurs de l'agencement d'unités d'éclairage est également modulée dans l'espace avec un motif spatial (400), fournissant ainsi une ou plusieurs unités d'éclairage à motif spatial ; l'équipement de détection comprenant :

une caméra (112) pour capturer des images des zones lumineuses transmettant des données d'une ou de plusieurs desdites unités d'éclairage transmettant des données multiples ; et un module de traitement d'image (114) configuré pour détecter les signaux respectifs sur la base d'une ou de plusieurs des images capturées ; dans lequel le module de traitement d'image de l'équipement de détection est configuré pour distinguer chacune desdites une ou plusieurs unités d'éclairage transmettant des données parmi les unités d'éclairage transmettant des données multiples, et pour détecter ainsi les signaux respectifs intégrés dans l'éclairage desdites une ou plusieurs unités d'éclairage transmettant des données,

**caractérisé en ce que** la distinction de chacune desdites une ou plusieurs unités d'éclairage transmettant des données parmi les unités d'éclairage transmettant des données multiples est basée sur une autocorrélation dudit motif spatial émis par lesdites une ou plusieurs unités d'éclairage à motif spatial apparaissant sur une ou plusieurs des images capturées.

**13.** Procédé d'émission d'éclairage comprenant :

le fonctionnement d'un agencement d'unités d'éclairage montées de manière contiguë (100) pour émettre de la lumière comprenant un éclairage visible dans un environnement (109) ; la modulation dans le temps de l'éclairage visible émis par chacune d'une partie ou de la totalité de l'agencement d'unités d'éclairage de sorte à intégrer un signal respectif différent dans l'éclairage visible émis par une zone lumineuse transmettant des données de chacune d'elles, fournissant ainsi des unités d'éclairage transmettant des données multiples, dans lequel les signaux doivent être détectés par l'équipement de détection (110) comprenant une caméra (112) pour capturer des images des zones lumineuses transmettant des données d'une ou de plusieurs desdites unités d'éclairage transmettant des données multiples et comprenant en outre un module de traitement d'image (114) configuré pour détecter les signaux respectifs sur la base d'une ou de plusieurs des images capturées ; et la modulation spatiale d'au moins une partie de la lumière émise par chacune d'une ou de plusieurs des unités d'éclairage dudit agencement avec un motif spatial (400), fournissant ainsi une ou plusieurs unités d'éclairage à motif spatial, de telle sorte que le module de traitement d'image de l'équipement de détection peut distinguer chacune desdites une ou plusieurs unités d'éclairage transmettant des données parmi les unités d'éclairage transmettant des données multiples, et détecter ainsi les signaux respectifs intégrés dans l'éclairage desdites une ou plusieurs unités d'éclairage transmettant des données,

**caractérisé en ce que** la distinction de chacune desdites une ou plusieurs unités d'éclairage transmettant des données parmi les d'unités d'éclairage transmettant des données multiples est basée sur une autocorrélation dudit motif spatial émis par lesdites une ou plusieurs unités d'éclairage à motif spatial apparaissant sur une ou plusieurs des images capturées.

**14.** Procédé de détection de lumière codée à partir d'un agencement d'unités d'éclairage montées de manière contiguë (100) agencé pour émettre de la lumière comprenant un éclairage visible dans un environnement (109), l'éclairage visible émis par chacune d'une partie ou de la totalité de l'agencement d'unités d'éclairage étant modulé dans le temps de sorte à intégrer un signal respectif différent dans l'éclairage visible émis par une surface lumineuse transmettant des données de chacune d'elles, fournissant ainsi des unités d'éclairage transmettant des données multiples, dans lequel au moins une partie de la lumière émise par chacune d'une ou de plusieurs de l'agencement d'unités d'éclairage est également modulée dans l'espace avec un motif spatial (400), fournissant ainsi une ou plusieurs unités d'éclairage à motif spatial ; le procédé comprenant :

l'utilisation d'une caméra (112) pour capturer une ou plusieurs images des zones lumineuses transmettant des données d'une ou de plusieurs desdites unités d'éclairage transmettant des données multiples ; et
la détection des signaux respectifs sur la base d'une ou de plusieurs des images capturées ; dans lequel ladite détection consiste à distinguer chacune desdites une ou de plusieurs unités d'éclairage transmettant des données parmi les unités d'éclairage transmettant des données multiples, et à détecter ainsi les signaux respectifs intégrés dans l'éclairage desdites une ou plusieurs unités d'éclairage transmettant des données,
**caractérisé en ce que** la distinction de chacune desdites une ou plusieurs unités d'éclairage transmettant des données parmi les unités d'éclairage transmettant des données multiples est basée une autocorrélation dudit motif spatial émis par lesdites une ou plusieurs unités d'éclairage à motif spatial apparaissant sur une ou plusieurs des images capturées.

15. Produit de programme informatique pour détecter de la lumière codée à partir d'un agencement d'unités d'éclairage montées de manière contiguë (100) agencé pour émettre de la lumière comprenant un éclairage visible dans un environnement (109), l'éclairage visible émis par chacune d'une partie ou de la totalité de l'agencement d'unités d'éclairage étant modulé dans le temps de sorte à intégrer un signal respectif différent dans l'éclairage visible émis par une surface lumineuse transmettant des données de chacune d'elles, fournissant ainsi des unités d'éclairage transmettant des données multiples, dans lequel au moins une partie de la lumière émise par chacune d'une ou de plusieurs de l'agencement d'unités d'éclairage est également modulée dans l'espace avec un motif spatial (400), fournissant ainsi une ou plusieurs unités d'éclairage à motif spatial ; le produit de programme informatique comprenant un code intégré sur le stockage lisible par ordinateur et qui, lorsque le code est exécuté par un ordinateur, amène l'ordinateur à réaliser les opérations suivantes :

réception d'une ou de plusieurs images, capturées par une caméra (112), des zones lumineuses transmettant des données d'une ou de plusieurs desdites unités d'éclairage transmettant des données multiples ; et
détection des signaux respectifs sur la base d'une ou de plusieurs des images capturées ; dans lequel ladite détection consiste à distinguer chacune desdites une ou plusieurs unités d'éclairage transmettant des données parmi les unités d'éclairage transmettant des données multiples, et à détecter ainsi les signaux respectifs intégrés dans l'éclairage desdites une ou plusieurs unités d'éclairage transmettant des données,
**caractérisé en ce que** la distinction de chacune desdites une ou plusieurs unités d'éclairage transmettant des données parmi les unités d'éclairage transmettant des données multiples est basée une autocorrélation dudit motif spatial émis par lesdites une ou plusieurs unités d'éclairage à motif spatial apparaissant sur une ou plusieurs des images capturées.

# Figure 1

101

100

104 → 106

102

105

108    108    ...

107

109

110

112

114

# Figure 2a

# Figure 2b

# Figure 3

# Figure 4

# Figure 5

## Figure 6a

100n    100n+1

400n    301    400n+1

## Figure 6b

100n    100n+1

400(n,a)    400(n,b)    400(n+1,a)    400(n+1,b)

301

## Figure 6c

100n    100n+1

400(n,a)    400(n,b)    400(n+1,a)    400(n+1,b)

301

## Figure 6d

100n    100n+1

400(n,a)    400(n,b)    400(n+1,a)    400(n+1,b)

301

## Figure 6e

100n    100n+1

400(n,a)    400(n,b)    400(n+1,a)    400(n+1,b)

301

## Figure 6f

100n    100n+1

400(n,a)    400(n,b)    400(n+1,a)    400(n+1,b)

301

# Figure 7

## Figure 8a

100

w1 w1 w2 w1 w1 w2 w2 w1 w1 w1 w2 w1

108 108 ...

## Figure 8b

108 108 ... 100

105'

## Figure 8c

108 108 ... 100

801 801 801 801 801 801 801 801

## Figure 8d

108 108 ... 100

# Figure 9a

Figure 9b

EP 3 488 665 B1

**EP 3 488 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130126713 A1

- WO 2015000772 A

**Non-patent literature cited in the description**

- **DUCO SCHREUDER.** Outdoor Lighting: Physics, Vision and Perception. Springer Science, 2008